(19) **Europäisches Patentamt / European Patent Office / Office européen des brevets**

(11) **EP 4 764 791 A1**

(12) **EUROPEAN PATENT APPLICATION**
published in accordance with Art. 153(4) EPC

(43) Date of publication:
**24.06.2026 Bulletin 2026/26**

(21) Application number: **24856116.9**

(22) Date of filing: **14.06.2024**

(51) International Patent Classification (IPC):
*G06F 3/01* (2006.01)     *G06T 13/40* (2011.01)
*G10L 13/10* (2013.01)

(52) Cooperative Patent Classification (CPC):
**G06F 3/01; G06T 13/40; G10L 13/10**

(86) International application number:
**PCT/JP2024/021785**

(87) International publication number:
**WO 2025/041421 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.08.2023 JP 2023133567**

(71) Applicant: **CYBERDYNE INC.**
**Tsukuba-shi, Ibaraki 305-0818 (JP)**

(72) Inventor: **SANKAI, Yoshiyuki**
**Tsukuba-shi, Ibaraki 305-0818 (JP)**

(74) Representative: **Hoefer & Partner Patentanwälte mbB**
**Pilgersheimer Straße 20**
**81543 München (DE)**

(54) **AUGMENTED SPACE CONSTRUCTION SYSTEM AND AUGMENTED SPACE CONSTRUCTION METHOD**

(57) Based on human and environment information corresponding to each participant, internal states of the corresponding participants are adaptively estimated, and, when the participants participate in communication activities, overall and interpersonal human relationships among the participants are evaluated while integrating internal states of all participants participating in the communication activities, and, based on evaluation results, intervention information representing affirmative words, actions, and attitudes for the purpose of empathetic understanding among the participants in the information space is successively generated and reflected on all or individual participants so as to intervene in communication activities of each participant.

FIG. 1

1 EXTENDED SPACE CONSTRUCTION SYSTEM

**Description**

Technical Field

The present invention relates to an extended space construction system and an extended space construction method, and is suitable, for example, for application to an extended space including a three-dimensional virtual space constructed on a network and a real space.

Background Art

In recent years, the term "metaverse" has been widely used to describe a fully immersive three-dimensional virtual space including a virtual environment in which humans are represented by avatars (characters serving as alter egos of users). As such a metaverse, for example, there is a virtual space experience system that allows a user to perceive images of a three-dimensional virtual space constructed on a network, while reflecting human activities of the user in a real space into the virtual space and making the user feel that the user themself is present in the virtual space.

In addition, speech recognition and response generation systems for robot dialogue have also been developed, and for example, a dialogue robot has been proposed that outputs, via a server, a response to a user's utterance in the form of speech (see Patent Literature 1). In this dialogue robot, a server analyzes the semantic content of a user's utterance, selects a response sentence corresponding to the semantic content with reference to a response sentence database, and outputs the selected response sentence in the form of audio data as speech.

Further developments have also proposed a meeting support apparatus that indirectly supports the progress of a meeting by supporting a facilitator who manages the progress of the meeting, or directly supports the progress of the meeting by assuming the role of the facilitator (see Patent Literature 2). In this meeting support apparatus, based on vital information of participants in a meeting, an activity level representing a degree of activation of discussion in the meeting is calculated, and, within a predetermined period after a facilitator recognizes a timing of an intervention to prompt participants to speak, activity level information representing a change in the activity level is output based on the activity level.

Citation List

Patent Literature

Patent Literature 1: Japanese Patent Laid-Open No. 2022-67709
Patent Literature 2: Japanese Patent Laid-Open No. 2022-68904

Summary of Invention

Technical Problem

However, when a meeting support system of Patent Literature 2 is implemented using the dialogue robot of Patent Literature 1, there has been a problem in that, although a plurality of participants participating in a metaverse perform communication activities, mere intervention by a facilitator is practically insufficient to deepen relationships among the participants.

The present invention has been made in consideration of the above points, and aims to propose an extended space construction system and an extended space construction method that enable a plurality of participants participating in an information space to deepen relationships with one another while performing communication activities.

Solution to Problem

In order to solve such problems, the present invention provides an extended space construction system including a human and environment information input/output unit that is provided for each of a plurality of participants present in a real space and that acquires human and environment information including brain and nervous system information, muscular and skeletal system information, physiological information, psychological information, motion information, behavior information, and environment information of each participant, a virtual activity construction unit that virtually constructs, in real time, communication activities of each participant in the real space in an information space based on the human and environment information corresponding to each participant output from the human and environment information input/output unit, an adaptive state estimation unit that is provided for each participant and that adaptively estimates an internal state of a corresponding participant based on the human and environment information output from the human and environment information input/output unit, a human relationship evaluation unit that evaluates overall and interpersonal human relationships among the participants while integrating internal states of all participants participating in the communication activities when each participant participates in the communication activities, an intervention information generation unit that successively generates intervention information representing affirmative words, actions, and attitudes for the purpose of empathetic understanding among the participants in the information space based on evaluation results obtained by the human relationship evaluation unit, and an activity reflection unit that reflects the intervention information generated by the intervention information generation unit on all or individual participants so as to intervene in the communication activities of each participant constructed in the information space.

As a result, in the extended space construction system, a plurality of participants participating in the information space are able to deepen relationships among the participants by sharing activity contents with one another while reflecting intervention information for guiding communication activities in the information space in a positive direction.

In the present invention, the adaptive state estimation unit has an identification model estimation unit that sets an identification model in which internal states of the participants are modeled as state variables and estimates internal parameters that are variable characteristics of the identification model with reference to the human and environment information, a difference estimation unit that estimates, with respect to the human and environment information output in real time from the human and environment information input/output unit, a difference indicating a degree to which the identification model associated with the internal parameters estimated by the identification model estimation unit has approached, and a parameter identification mechanism unit that modifies the internal parameters constituting the identification model such that the difference estimated by the difference estimation unit is reduced, and the intervention information generation unit changes contents of the intervention information based on the internal parameters estimated by the identification model estimation unit such that modification by the parameter identification mechanism unit is gradually reduced.

As a result, in the extended space construction system, during interactions among the participants in the information space, the system facilitates the interactions so that mutual empathy can be promoted and encourages active interactions, thereby enabling the participants to share an internal environment of the information space, experience physical and psychological connections with others, and improve empathy toward others.

Further, in the present invention, the extended space construction system includes an evaluation learning unit that constructs an effectiveness evaluation model learned to evaluate effectiveness of the intervention information generated by the intervention information generation unit based on an integration result of human and environment information of the participants, and the intervention information generation unit adaptively modifies the intervention information such that evaluation criteria based on the effectiveness evaluation model constructed by the evaluation learning unit are always satisfied.

As a result, in the extended space construction system, during activities of each participant in the information space, it becomes possible to maintain relatively high quality of intervention information that affects internal states of the participants (such as expert knowledge of clinical psychologists).

Further, in the present invention, the extended space construction system includes a favorability evaluation learning unit that constructs a favorability evaluation model learned to evaluate favorability of an environmental state of a selected virtual space based on an integration result of human and environment information of the participants, and an environment state modification unit that adaptively modifies an environmental state of the information space such that evaluation criteria based on the favorability evaluation model constructed by the favorability evaluation learning unit are always satisfied.

As a result, in the extended space construction system, during activities of each participant in the information space, it becomes possible to always maintain an environmental state of the information space that affects internal states of the participants in an optimal state.

Further, in the present invention, the intervention information generation unit has a correlation quantification unit that quantitatively determines, in a time-series manner, correlations among internal states of the participants, and a transition state evaluation unit that evaluates transition states of internal states of the participants based on the correlations respectively quantified by the correlation quantification unit, and the intervention information is adaptively adjusted in accordance with evaluation results obtained by the transition state evaluation unit.

As a result, in the extended space construction system, it is possible for the system as a whole to grasp processes in which internal states of the participants change while being influenced by words, actions, and attitudes of other participants, thereby enabling appropriate responses (interventions) to each participant.

Further, in the present invention, the system includes a spatial layer construction unit that constructs, when the participants perform communication activities in the information space, a spatial layer for extending the information space while the participants in the information space cooperate with one another.

As a result, in the extended space construction system, it becomes possible to extend the information space while the participants cooperate with one another within the information space.

Further, in the present invention, the system includes a learning model training unit that trains a learning model constructed by statistical and mathematical processing for mapping cooperative contents among the participants to spatial expansion of the information space based on a construction process of the spatial layer constructed by the spatial layer construction unit, and the spatial layer construction unit automatically constructs the spatial layer based on the learning model trained by the learning model training unit even without cooperation of the participants.

As a result, in the extended space construction system, it becomes possible to cause a process of expanding the information space to be learned through learning and to automatically continue expansion processing even without cooperation of the participants.

Further, in the present invention, the system includes a layer management unit that manages, for the purpose of maintaining order, a spatial layer constructed in an information space to be extended when a learning model is trained by the learning model training unit.

As a result, in the extended space construction system, when expansion processing of the information space is continued, it becomes possible to prevent disadvantages to the participants in advance by performing management for the purpose of maintaining order.

In the present invention, there is provided an extended space construction method including a first step of acquiring, for each of a plurality of participants present in a real space, human and environment information including brain and nervous system information, muscular and skeletal system information, physiological information, psychological information, motion information, behavior information, and environment information, a second step of virtually constructing, in real time, communication activities of each participant in the real space in an information space based on the human and environment information corresponding to each participant acquired in the first step, a third step of adaptively estimating, for each participant, an internal state of a corresponding participant based on the human and environment information output from the human and environment information input/output unit, a fourth step of evaluating overall and interpersonal human relationships among the participants while integrating internal states of all participants participating in the communication activities when each participant participates in the communication activities, a fifth step of successively generating intervention information representing affirmative words, actions, and attitudes for the purpose of empathetic understanding among the participants in the information space based on evaluation results obtained in the fourth step, and a sixth step of reflecting the intervention information generated in the fifth step on all or individual participants so as to intervene in communication activities of each participant constructed in the information space.

As a result, in the extended space construction system, a plurality of participants participating in the information space are able to deepen relationships among the participants by sharing activity contents with one another while reflecting intervention information for guiding communication activities in the information space in a positive direction.

Advantageous Effects of Invention

According to the present invention, it is possible to realize an extended space construction system and an extended space construction method that enable a plurality of participants participating in an information space to deepen relationships with one another while performing communication activities.

Brief Description of Drawings

[Figure 1] Figure 1 is a conceptual diagram for explaining an extended space construction system according to an embodiment.
[Figure 2] Figure 2 is a conceptual diagram showing an internal configuration of an interface device shown in Figure 1.
[Figure 3] Figure 3 is a perspective view and a six-sided view showing an external configuration of a vital sign measurement apparatus.
[Figure 4] Figure 4 is a conceptual diagram illustrating a configuration of a brain activity measurement unit.
[Figure 5] Figure 5 is a conceptual diagram illustrating a configuration of a biological signal measurement wearing device.
[Figure 6] Figure 6 is a conceptual diagram for explaining a worn state of the biological signal measurement wearing device.
[Figure 7] Figure 7 is a conceptual diagram illustrating an additional configuration of the vital sign measurement apparatus.
[Figure 8] Figure 8 is a graph showing pulse waveforms before and after filter application.
[Figure 9] Figure 9 is a conceptual diagram representing an ROI of a near-infrared image and an ROI of a far-infrared image.

[Figure 10] Figure 10 is a conceptual diagram for explaining nasal breathing and mouth breathing.

[Figure 11] Figure 11 is a conceptual diagram for explaining temperature states of nasal breathing and mouth breathing.

[Figure 12] Figure 12 is a graph representing changes in nasal temperature due to nasal breathing and changes in oral temperature due to mouth breathing.

[Figure 13] Figure 13 is a graph in which a change in breathing method from nasal breathing to mouth breathing and state information of each state are superimposed.

[Figure 14] Figure 14 is a conceptual diagram for explaining non-contact measurement of oxygen saturation using light.

[Figure 15] Figure 15 is a block diagram illustrating an internal configuration of a motion capture device.

[Figure 16] Figure 16 is a conceptual diagram for explaining a method for acquiring three-dimensional skeletal information of a whole body of a participant.

[Figure 17] Figure 17 is a conceptual diagram representing a structure of a behavior recognition model.

[Figure 18] Figure 18 is a conceptual diagram mainly showing an internal configuration of an interface device according to another embodiment.

[Figure 19] Figure 19 is a conceptual diagram mainly showing an internal configuration of an interface device according to another embodiment.

[Figure 20] Figure 20 is a conceptual diagram mainly showing an internal configuration of an interface device according to another embodiment.

[Figure 21] Figure 21 is a conceptual diagram mainly showing an internal configuration of an interface device according to another embodiment.

[Figure 22] Figure 22 is a conceptual diagram mainly showing an internal configuration of an interface device according to another embodiment.

Description of Embodiments

Embodiments of the present invention are described in detail below with reference to drawings.

(1) Configuration of Extended Space Construction System According to Present Embodiment

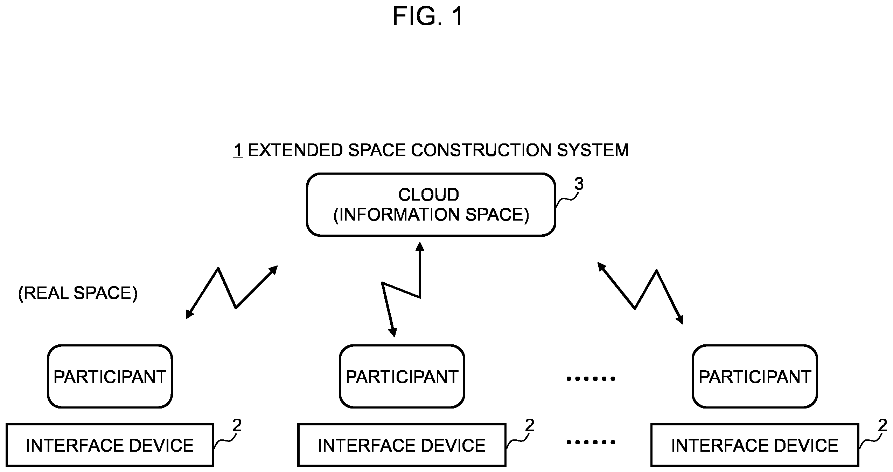

Figure 1 shows an extended space construction system 1 according to the present embodiment. The extended space construction system 1 is configured such that an interface device 2, which acquires various kinds of information obtained from a participant himself/herself present in a real space and a surrounding environment, is provided for each participant, and various kinds of information transmitted from each interface device 2 are reflected in an information space constructed in a cloud 3.

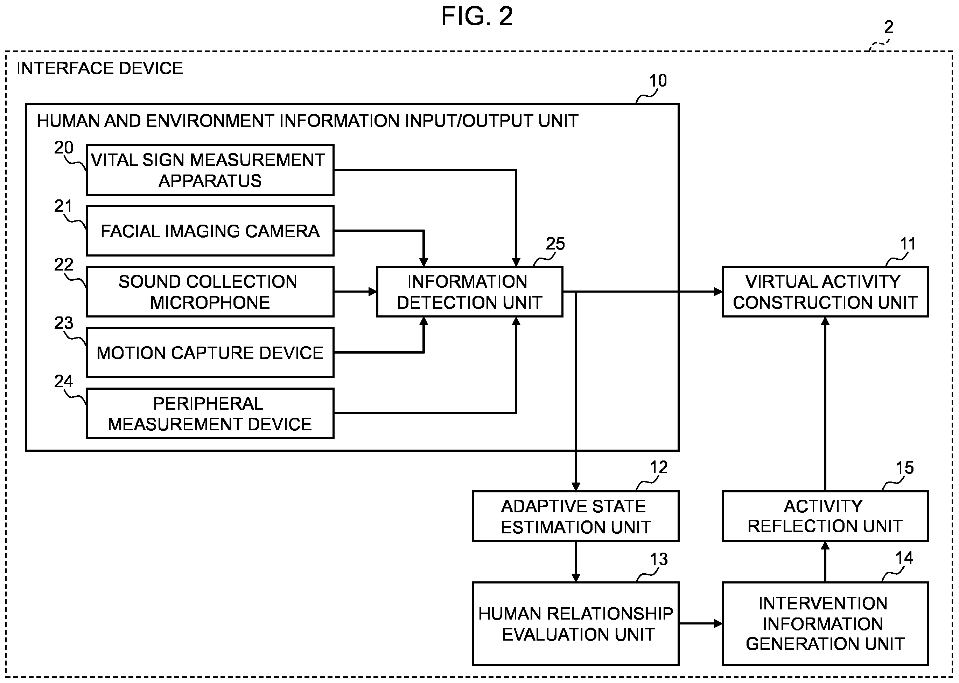

As shown in Figure 2, each interface device 2 includes a human and environment information input/output unit 10, a virtual activity construction unit 11, an adaptive state estimation unit 12, a human relationship evaluation unit 13, an intervention information generation unit 14, and an activity reflection unit 15.

The human and environment information input/output unit 10 has vital sign measurement apparatuses 20 (means for measuring electrocardiogram, pulse rate, pulse pressure, oxygen saturation, body temperature, EEG, blood sugar, blood pressure, myoelectricity, etc.), a facial imaging camera 21, a sound collection microphone 22, a motion capture device 23 (optical, inertial sensor-based, mechanical, magnetic, or a combination thereof), and peripheral measurement devices 24 (thermometers, hygrometers, and surrounding sound collectors for audible sound and ultrasonic sound, etc.), and an information detection unit 25 that detects human and environment information based on the output of these sensor groups and devices, as described below.

In this human and environment information input/output unit 10, the information detection unit 25 detects the subject's brain and nervous system information, muscular and skeletal system information, and physiological information based on the detection results by the vital sign measurement apparatuses 20, as well as psychological information by analyzing the subject's facial expression and voice using the facial imaging camera 21 and sound collection microphone 22. In addition, the motion capture device 23 detects the subject's action information and behavior information, and the peripheral measurement device 24 detects the subject's surrounding environment information.

The virtual activity construction unit 11 virtually constructs human activity of the subject in the real space in the information space in real time based on the subject's human and environment information output from the human and environment information input/output unit 10.

Here, the term "information space" refers to a virtual space generated by a computer, which is represented by a three-dimensional virtual space constructed on a network (cloud 3) and its service, the metaverse. The required functionality of this information space must allow bidirectional network communication with the real space. When the information space is used as a general-purpose platform, it is desirable that the system providing the information space be open, and that user management and access restriction functions be added. Examples of information spaces that fulfill these functions include Second Life (registered trademark) provided by Linden Lab and OpenSim provided under the Berkeley Software Distribution License (BSD License).

The adaptive state estimation unit 12 adaptively estimates for each participant, an internal state of a corresponding participant based on human and environment information output from the human and environment information input/output unit 10. This internal state is information that contributes to empathy among participants sharing a common space, and represents a precursor state preceding utterances, facial expressions, actions, and the like that lead to a force for promoting such empathy.

The human relationship evaluation unit 13 evaluates overall and interpersonal human relationships among the participants while integrating internal states of all participants participating in the communication activities when each participant participates in the communication activities.

The intervention information generation unit 14 successively generates intervention information representing affirmative words, actions, and attitudes for the purpose of empathetic understanding among the participants in the information space, based on evaluation results obtained by the human relationship evaluation unit 13. The activity reflection unit 15 reflects the intervention information generated by the intervention information generation unit 14 on all or individual participants so as to intervene in communication activities of each participant constructed in the information space.

As a result, in the extended space construction system 1, a plurality of participants participating in the information space are able to deepen relationships among the participants by sharing activity contents with one another while reflecting intervention information for guiding communication activities in the information space in a positive direction.

(2) Detailed Configuration and Functions of Human and Environment Information Input/Output Unit

(2-1) Configuration of Vital Sign Measurement Apparatuses

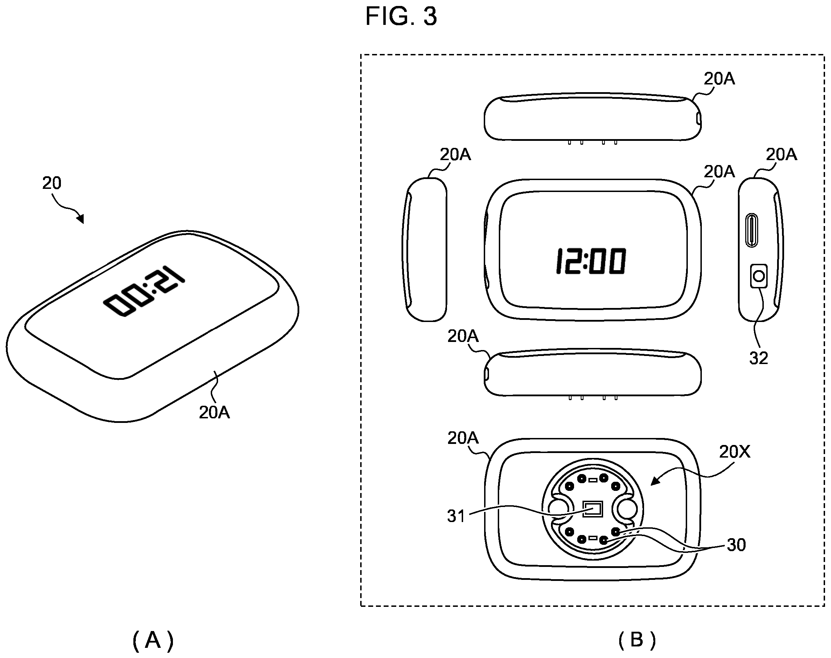

Specifically, as shown in Figure 3(A), the vital sign measurement apparatus 20 has an electrode terminal group 30 and a photoelectric probe window 31 arranged in a predetermined pattern on a measurement surface 20X of the device body 20A and is configured to measure the subject's biological information through the measurement surface 20X. The biometric information covered by the vital sign measurement apparatus 20 is a measurement result of at least one or more of electrocardiogram, pulse rate, pulse pressure, oxygen saturation, body temperature, electroencephalogram, blood glucose level, blood pressure, and myoelectricity. In other words, the vital sign measurement apparatus 20 is configured so that the same device body can be used as means for measuring all types of biometric information.

As shown in Figure 3(B), the vital sign measurement apparatus 20 has a sound collection microphone 22 detachably connected to a connection terminal 32 provided on a side of the device body 20A, which can collect vibrations generated from the subject's larynx and pharynx as acoustic signals when connected. As a result, information about the subject regarding vibrations (non-audible region) of the heart or respiration that cannot be heard by the ears can be acquired.

(2-2) Detection Method of Brain and Nervous System Information

The human and environment information input/output unit 10 has, as an additional configuration of the vital sign measurement apparatus 20, a brain activity measurement unit 40 that is attached to the subject's head and measures electroencephalograms (EEG) and cerebral blood flow in the area to be measured on the head. The information detection unit 25 then converts the transmission state of the central nervous system centered on the head into quantitative nervous system data based on EEG and cerebral blood flow measurement data obtained from the brain activity measurement unit 40.

A brain activity measurement unit 40 according to the present embodiment is in line with the contents described in Japanese Patent No. 5283700 by the present inventor and uses the same principle.

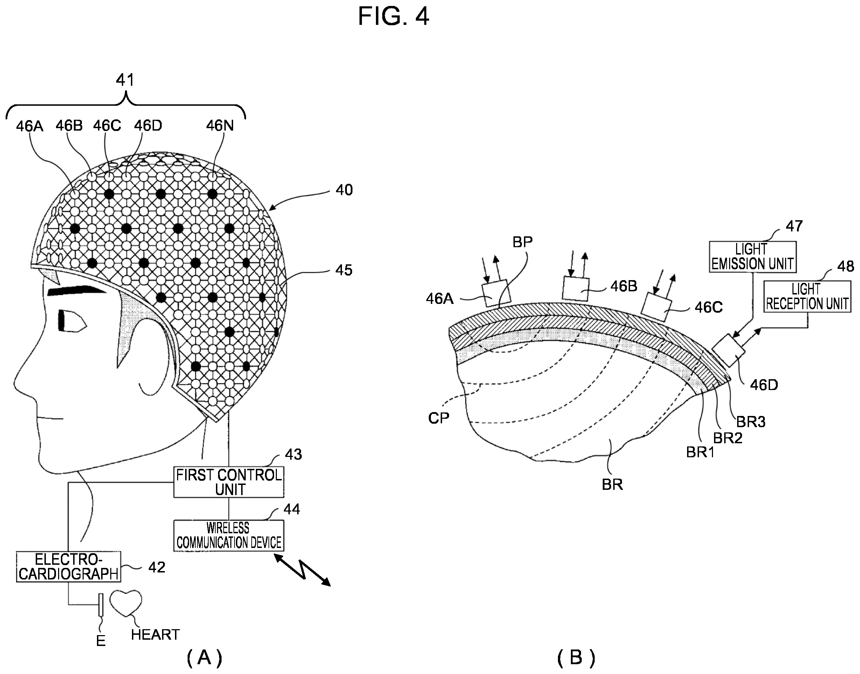

As shown in Figure 4(A), the brain activity measurement unit 40 has a blood flow measurement unit 41, an electrocardiograph 42, a first control unit 43, and a wireless communication device 44. The blood flow measurement unit 41 measures the state of blood flow by changes in the optical path and transmitted light intensity of the laser light due to blood flow, and also measures the state of brain activity from the state of blood flow in the brain.

When laser light irradiated onto blood enters a blood layer, the laser light propagates through the blood as light including both a reflected and scattered light component due to normal red blood cells and a reflected and scattered light component due to attached thrombi. Since the amount of laser light transmitted through the blood layer varies from moment to moment depending on the state of the blood, it is possible to observe various changes in the state of the blood by continuously measuring the amount of transmitted light (amount of reflected light) and observing the changes in the amount of light.

The blood flow measurement unit 41 includes a net-like base 45 formed in a hemispherical shape according to the outline of the head to be worn on the head, and many sensor units 46A to 46N. Each of the sensor units 46A to 46N is supported at predetermined intervals by the net-like base 45 and outputs a detection signal of the amount of transmitted light measured at each measuring point on the head to the first control unit 43. The electrocardiograph 42 measures the cardiac potential generated by an electrode E affixed to the subject's skin in response to heart movement.

The first control unit 43 measures the state of brain activity (distribution of red blood cells) by deriving the displacement of blood vessels and tissue around blood vessels due to blood flow based on the light intensity when light emitted from a light emission unit 47 (Figure 4(B)) of each sensor unit 46A to 46N is received by a light reception unit 48. The first control unit 43 also stores a control program that performs arithmetic processing to cancel the component due to oxygen saturation in the signals obtained from at least two or more of the light reception units 48.

Furthermore, the first control unit 43 derives the displacement of the inner wall of the blood vessel based on the displacement of the blood vessel and the tissue surrounding the blood vessel. Furthermore, the first control unit 43 acquires the pulse wave velocity at each measurement position from the phase difference between the waveform of the electrocardiogram signal of the electrocardiograph 42 and the waveform of the detection signal obtained from the light reception unit and derives the displacement state of the inner wall of the blood vessel from the pulse wave velocity.

The wireless communication device 44 wirelessly transmits the measurement results (blood flow data) output from the first control unit 43 to the vital sign measurement apparatus 20. The brain activity measurement unit 40 has the optical sensor units 46A to 46N arranged on the net-like base 45, so that blood flow throughout the head can be measured simultaneously.

When measuring the vascular characteristics of the brain, as shown in Figure 4(B), the first control unit 43 selects any sensor unit 46D from the many arrayed sensor units 46A to 46N and emits a laser light from the light emission unit 47 of the sensor unit 46D. The laser light emitted from the light emission unit 47 is output at a wavelength $\lambda$ ($\lambda \approx 805$ nm), which is not affected by oxygen saturation.

In the brain activity measurement unit 40, when the blood flow measurement unit 41 is attached to the subject's head, the elasticity of the net-like base 45 holds the plurality of sensor units 46A to 46N in position at each measurement point on the head and with each measurement surface facing the head surface. When the blood flow measurement unit 41 is worn on the head, the plurality of sensor units 46A to 46N irradiate light onto the surface of the brain and measure the pulse wave propagation velocity in the arteries of the brain from changes in the amount of received light that propagates through the brain to measure the vascular characteristics (rate of elasticity of the blood vessel, amount of plaque in the blood vessel, rate of arterial stiffness) of the middle cerebral artery and anterior cerebral artery.

The principle of measuring pulse wave propagation velocity of cerebral arteries is explained below. For example, pulse wave propagation velocity due to blood flow through the middle cerebral artery and anterior cerebral artery is detected by each of the sensor units 46A to 46N, which are arranged corresponding to the positions to be measured that receives light propagated through the brain when light is irradiated. As a measurement method, a method is used in which a waveform of a cardiac potential obtained from the electrocardiograph 42 is compared with waveforms of signals output from the respective sensor units 46A to 46N at measurement target positions, a pulse wave propagation velocity is obtained from a phase difference, and vascular characteristics corresponding to the pulse wave propagation velocity are derived.

The principle of detecting vascular characteristics from blood flow in the brain is also explained. As shown in Figure 4(B), the brain BR is covered by spinal fluid BR1, skull BR2, and scalp BR3. Some of the laser light emitted from the light emission unit 47 of each of the sensor units 46A to 46N of the blood flow measurement unit 41 is reflected by the scalp BR3, but the remaining light penetrates the scalp BR3, skull BR2, and spinal fluid BR1 and travels inside the brain BR. The light irradiated to the head that has traveled to the brain propagates in the radial direction (depth and radial direction) in a circular arc pattern CP, as shown by the dashed lines in the figure.

Light propagation through the brain decreases in light transmittance as the light propagation path lengthens the further radially away from a base point BP where the laser light was irradiated. Therefore, the light-receiving level (amount of transmitted light) of the sensor unit 46B, which is adjacent to the sensor unit 46A on the emitting side and separated by a predetermined distance, is strongly detected. The light-receiving level (amount of transmitted light) of the sensor unit 46C, which is located next to the sensor unit 46B and separated by a predetermined distance, is detected weaker than that of the sensor unit 46B. The light reception unit 48 of the sensor unit 46A on the emitting side also receives light from the brain.

The first control unit 43 uses the detection signals corresponding to the light intensity received by the plurality of sensor units 46A to 46N as measurement data and compares their waveforms with the waveform of the cardiac potential signal from the electrocardiograph 42 to derive the vascular characteristics at each measurement position. Performing mapping processing on these detection results can also provide graphic data showing the distribution of arterial stiffness according to pulse wave propagation velocity.

Therefore, it is possible to measure changes in blood flow through the middle cerebral artery and anterior cerebral artery using the detection signal waveforms of each sensor unit 46A to 46N, and detect pulse wave propagation velocity in the brain from the measurement data of the blood flow changes.

Thus, the vital sign measurement apparatus 20 has the brain activity measurement unit 40 that is attached to the subject's head and measures EEG and cerebral blood flow in the area to be measured on the head, and the information detection unit 25 also adds, as nervous system data, the transmission state of the central nervous system centered on the head based on EEG and cerebral blood flow measurement data obtained from the brain activity measurement unit 40. In this way, the state of transmission of the central nervous system from the subject's brain can also be quantitatively acquired as data, and the subject's progress state and transition state can be monitored.

As a result, the state of transmission of the central nervous system from the subject's brain can also be quantitatively acquired as data, and the subject's progress state and transition state can be monitored.

(2-3) Detection Method of Muscular and Skeletal System Information

The human and environment information input/output unit 10 has, as an additional configuration of the vital sign measurement apparatus 20, a biological signal measurement wearing device 50 worn by a subject and a joint periphery detection unit (not shown). The joint periphery detection unit includes an actuator that is driven actively or passively in association with limb movements of a subject, and detects physical quantities around joints accompanying the limb movements of the subject based on output signals from the actuator.

The physical quantities around joints include at least one or more parameter identification results among generated muscle forces produced in a musculoskeletal system, ranges of motion of respective joints, movement velocities and response velocities, autonomous control characteristics with respect to disturbances, moments of inertia of a frame, mass, and a center of gravity, impedance adjustment results of a joint system including flexor muscles and extensor muscles (viscous characteristics due to friction), electrical physical quantities (command signals), and the like.

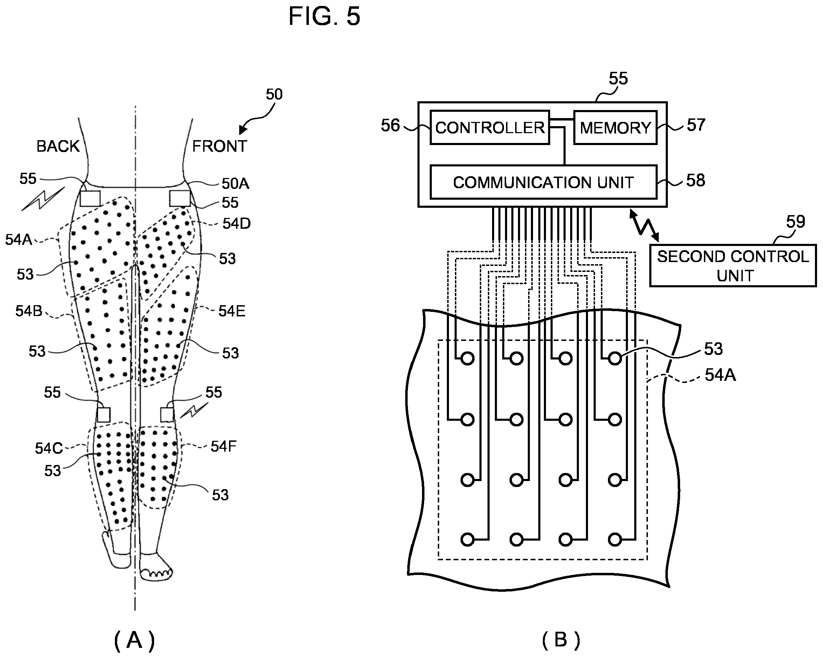

The biological signal measurement wearing device 50 worn by a subject is in line with the contents described in Japanese Patent No. 5409637 by the present inventor and uses the same principle. Figure 5(A) shows the biological signal measurement wearing device 50 according to this embodiment. The biological signal measurement wearing device 50 has a wearing device body 50A that is formed so as to cover a body surface of a subject and is worn by the subject, and on an inner surface of the wearing device body 50A (a surface that contacts the body surface of the subject in a worn state), the biological signal measurement wearing device 50 includes a biological signal sensor 53 that detects biological potential signals at least one position at which biological signals can be measured from the body of the subject.

A biological signal is a signal originating from electricity generated within a body of a subject, is a signal measurable from the body, and is a signal that changes in time series in association with bodily movements and signals from a brain. For example, biological signals mean signals generated by biological activities, such as neural potentials, myoelectric potentials, electroencephalograms, and cardiac potentials, potentials generated by motion artifacts (effects of movement), potentials generated by biochemical reactions, and vibrations such as pulse waves generated by heartbeats. The generation potential (amplitude, density, time delay) and the site of generation of the biological signal are also taken into account for quantitative data generation.

In Figure 5(A), the biological signal measurement wearing device 50 in this example has a symmetrical structure, so the left half of the figure shows the structure behind the left leg and the right half of the figure shows the structure in front of the left leg. The wearing device body 50A is provided with biological signal sensor groups 54A to 54F each including a plurality of biological signal sensors 53 that detect biological signals of a subject. The biological signal sensors 53 are arranged at equal intervals along the muscle flow of the subject's legs.

The plurality of biological signal sensors 53 are arranged on the wearing device body 50A along a flow of a gluteus maximus muscle at a portion corresponding to buttocks of a subject (biological signal sensor group 54A). Similarly, at a portion corresponding to a rear side of a thigh of the subject (biological signal sensor group 54B), biological signal sensors are arranged along flows of a biceps femoris muscle, a semimembranosus muscle, and a semitendinosus muscle, and at a portion corresponding to a calf (biological signal sensor group 54C), biological signal sensors are arranged along a flow of a triceps surae muscle. Also, in a region corresponding to the anterior side of the hip joint (biological signal sensor group 54D), sensors are arranged along the course of the adductor longus and the iliopsoas; in a region corresponding to the anterior side of the thigh (biological signal sensor group 54E), sensors are arranged along the course of the quadriceps femoris; and in a region corresponding to the shin (biological signal sensor group 54F), sensors are arranged along the course of the tibialis anterior, the soleus, and the extensor digitorum longus.

Here, Figure 5(B) is a diagram showing an example of a measurement module connected to biological signal sensor groups in the wearing device body 50A. Since all biological signal sensor groups 54A to 54F in the wearing device body 50A are connected to the measurement module 55 in the same way, the biological signal sensor group 54A is used as an example here.

Figure 5(B) is a diagram schematically showing the biological signal sensor group 54A in the wearing device body 50A and the measurement module 55 connected to this biological signal sensor group 54A. Each of the biological signal sensors 53 included in the biological signal sensor group 54A is insulated from each other, and each is connected to the measurement module 55 via conductive wiring. Each of these biological signal sensors 53 is assigned an address.

The measurement module 55 includes a measurement module controller 56 to which a plurality of biological signal sensors 53 constituting the biological signal sensor group 54A are connected, the measurement module controller 56 selecting at least two biological signal sensors 53 from these biological signal sensors 53 and acquiring a biological signal by taking a difference between detection signals detected by the selected biological signal sensors 53; a memory 57 that records the acquired biological signal; and a communication unit 58 that transmits to the outside biological signals sequentially acquired and/or biological signals recorded in the memory 57. The measurement module 55 is provided for each biological signal sensor group 54A to 54F, to which the respective biological signal sensors 53 are connected.

The measurement module controller 56 has electronic circuit capable of sequentially selecting at least two biological signal sensors 53 from the plurality of connected biological signal sensors 53 in response to a command signal input via the communication unit 58 and acquiring the biological signals between these two selected biological signal sensors 53.

The measurement module controller 56 further has signal processing means such as a filter that removes or extracts predetermined frequency components from the biological signals thus acquired and an amplifier that amplifies the acquired biological signals. The biological signals thus acquired are output from the measurement module controller 56 to the communication unit 58 and/or the memory 57. When selecting the biological signal sensors 53, the measurement module controller 56 may operate each biological signal sensor 53 sequentially in a preset order, or it may select the biological signal sensor 53 at the address designated by the designation signal based on a designation signal input via the communication unit 58.

The communication unit 58 has a thin antenna and a communication circuit connected to this antenna. The communication unit 58 transmits, via an antenna, measurement information to a second control unit 59, the measurement information including a signal that includes a biological signal output from the measurement module controller 56 and information such as an address indicating position information of a biological signal sensor 53 that detected the biological signal, and/or a signal that includes a biological signal read from the memory 57 and information such as an address indicating position information of a biological signal sensor 53 that detected the biological signal.

This second control unit 59 generates a designation signal to specify which of the biological signal sensors 53 is to be selected from each of the biological signal sensor groups 54A to 54F provided in the wearing device body 50A, and signals to start and end data acquisition, etc., and selects the designated biological signal sensor 53 according to the signal and measures the biological signals.

Thus, with the biological signal measurement wearing device 50 of the present invention, the biological signal sensor groups 54A to 54F having the plurality of biological signal sensors 53 are provided in the wearing device body 50A, so that the plurality of biological signal sensors 53 can be placed at a given site at once by simply wearing the wearing device body 50A, allowing to detect biological signals at each point by placing them in close contact with the skin surface. Thus, even when biological signals are monitored at a large number of points on the body surface of a subject, it is possible to eliminate the labor of attaching and detaching the biological signal sensors 53 one by one, and to easily measure biological signals.

By detecting biological signals with the plurality of biological signal sensors 53 in this manner, biological signals can be measured at a plurality of respective points in the area where the biological signal sensor groups 54A to 54F are located. The measured data at each point can then be mapped according to the address assigned to each of the biological signal sensors 53 to measure the distribution of biological signals in the subject's body.

The second control unit 59 obtains from the biological signals acquired by the measurement module 55 the myopotential signals associated with the subject's muscle activity and the neurotransmission signals for operating the subject's musculoskeletal system.

The information detection unit 25 converts, based on the physical quantities around the joint described above and one or both of the myopotential signals and neurotransmission signals obtained from the second control unit 59, the activity state of the musculoskeletal system centered on the joint and/or the transmission state of the peripheral nervous system into quantitative musculoskeletal data and/or nervous system data, and also converts the transmission state of either or both of the central nervous system and the peripheral nervous system centered on a desired site into quantitative nervous system data.

As a result, the subject can perform limb movements to obtain quantitative data on the activity state of the musculoskeletal system and the transmission state of the peripheral nervous system based on physical quantities around joints and biological signals obtained from body surface sites with reference to joints, and to monitor the subject's progress state and transition state.

In addition, biological signals are acquired from body surface sites other than sites referenced to the subject's joints, and quantitative data are acquired not only on the peripheral nervous system around the joints but also on the transmission state of the central nervous system and/or the peripheral nervous system from desired sites, thereby making it possible to monitor the progress state and transition state of the subject.

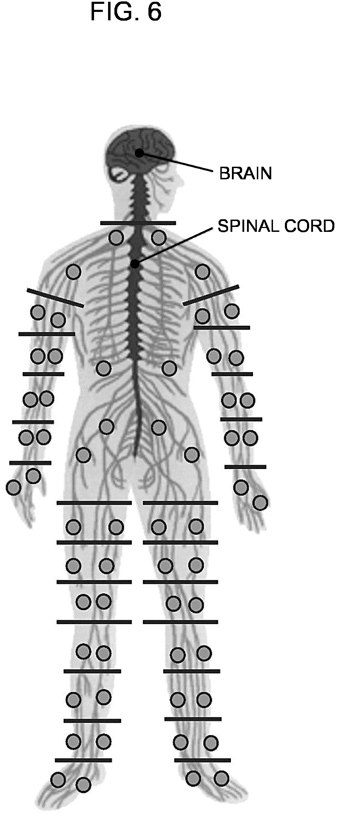

It should be noted that, for example, as shown in Figure 6, by arranging the biological signal sensor groups 54A to 54F over the entire body of the subject, it becomes possible to visualize state transitions of information transmission pathways in the cranial nervous system. In Figure 6, if the entire body of the subject is divided into units of predetermined regions (for example, regions innervated by sensory nerves such as dermatomes), neural connections throughout the entire body can be grasped from a bird's-eye view and on a region-by-region basis. Therefore, if it is possible to detect at which site a problem in nerve transmission has occurred, it becomes possible to ascertain not only the problematic site but also the degree of influence on either the central side or the peripheral side.

(2-4)Method of Detecting Activity State of Physiological System

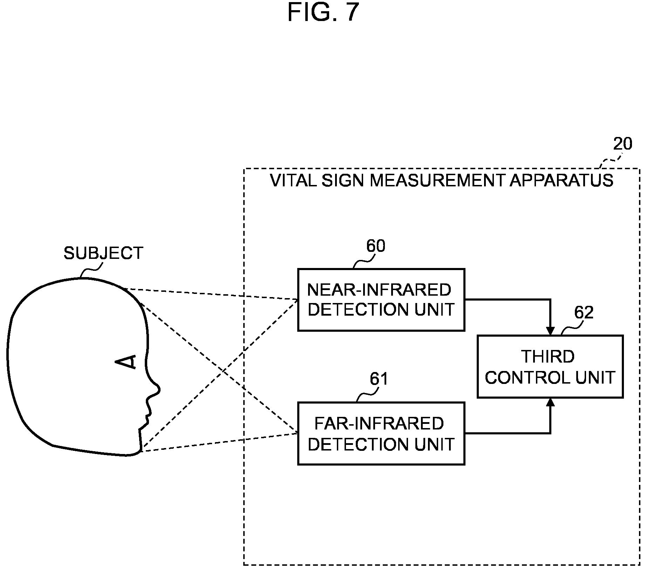

In the human and environment information input/output unit 10, as an additional configuration of the vital sign measurement apparatus 20, as shown in Figure 7, a near-infrared detection unit 60 and a far-infrared detection unit 61 are provided, and activity states of the physiological system and the nervous system of the subject are detected using a non-contact method.

That is, the human and environment information input/output unit 10 simultaneously and noninvasively measures fluctuations in the pulse rate and changes in skin temperature of the subject in daily life by irradiating infrared rays centered on the face of the subject using the near-infrared detection unit 60 and the far-infrared detection unit 61.

The near-infrared detection unit 60 irradiates near-infrared light centered on a region of interest including a cheek area of the subject's face, receives reflected light from the face, and generates a near-infrared image. In addition, the far-infrared detection unit 61 irradiates far-infrared light centered on a region of interest of the subject's face and detects the skin temperature of the face.

The third control unit 62 estimates the pulse rate of the subject based on a period of change of an intensity waveform in a region of interest among reflected light received by the near-infrared detection unit 60. The third control unit 62 extracts, from a near-infrared image generated by the near-infrared detection unit 60, regions of the subject's face that are susceptible to activity of the autonomic nervous system and regions that are less susceptible thereto, respectively, and calculates a temperature difference in skin temperature for each region based on detection results of the far-infrared detection unit 61.

A. Pulse Measurement Method Based on Infrared Light

In biological tissues, light-absorbing substances are water and hemoglobin in blood. Water has a strong absorption property in infrared rays with wavelengths longer than 1350 nm, while hemoglobin has a strong absorption property in visible light with wavelengths shorter than 650 nm. In noninvasive biological diagnosis using light, light in an infrared to near-infrared region having wavelengths from 650 nm to 1350 nm, which have high biological permeability, is irradiated, and reflected light or transmitted light containing biological information is often measured.

A pulse is a physiological phenomenon in which a volume of a blood vessel changes due to blood pressure work caused by cardiac output. A change in a volume of a blood vessel is caused by a change in blood flow volume. Because a change in blood flow volume causes a change in an amount of light absorbed by hemoglobin in blood, it is possible to estimate a pulse rate from a change period of transmitted light or reflected light of light irradiated onto a living body.

In the present invention, without requiring the subject to wear a measurement device and in order to perform measurements regardless of day or night, a change period of reflectance of near-infrared light irradiated onto a living body is measured by a near-infrared camera, and a pulse rate is estimated. Since near-infrared light is invisible, measurement can be performed even at night without imposing a burden on the subject to be measured. In order to estimate a stress state from a pulse rate, it is necessary to measure a pulse rate that finely fluctuates due to activity of the autonomic nervous system.

The third control unit 62 implements an algorithm that extracts a waveform period required for calculating a pulse rate from waveform data obtained from the near-infrared detection unit 60.

The near-infrared detection unit 60 measures the intensity of the reflected light reflected by the irradiated near-infrared rays in the living tissue. The near-infrared detection unit 60 performs measurement for a subject at rest, while minute body movements and facial movements due to respiration are superimposed on a pulse waveform as motion artifacts representing changes in an amount of reflected light.

To remove these motion artifacts, a digital filter is first applied to the pulse rate frequency band. A range of a pulse rate at rest is set to 35 to 180 bpm, and motion artifacts may be superimposed on a measured waveform also in a band of 0.5 to 3.0 Hz, while an amplitude of a waveform superimposed on a pulse waveform is significantly large.

Therefore, when a variance value of waveform data within a certain period exceeds a threshold, the third control unit 62 recognizes that the subject is in motion and removes data during that period as data having low reliability. A waveform after band-pass filtering has a bimodal characteristic due to arterial blood flow volume. In order to facilitate feature point extraction, a moving average filter is applied to convert a two-peak waveform into a single-peak waveform.

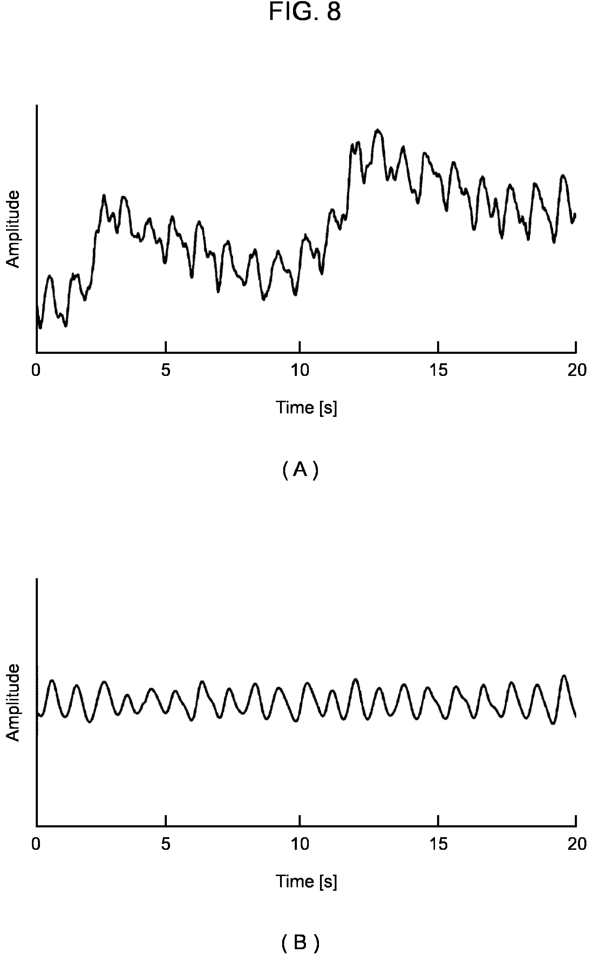

Waveforms before and after application of a band-pass filter and a moving average filter to a measured waveform are shown in Figure 8(A) and Figure 8(B), respectively. It can be seen that motion artifacts superimposed on the pulse waveform are removed by filtering.

Next, as methods for calculating a pulse rate from an intensity waveform of light measured by a near-infrared camera, two major methods are generally known.

In a first method, a cheek portion of a face is set as a region of interest (ROI), and, among frequency spectra obtained by a spectral analyzer from intensity data of reflected light of the cheek portion for 30 seconds acquired by measurement using an RGB camera, a frequency considered to be a pulse wave component is compared with a frequency derived from a pulse rate indicated by a pulse oximeter. However, noise caused by body motion is significantly large relative to a pulse waveform. When attempting to calculate a pulse rate by such frequency analysis, it is necessary to greatly restrict behavior of a subject to be measured.

On the other hand, in a second method, a time required for one pulse beat is calculated from a period of feature points of a waveform detected from time-series data of a measured waveform, and a pulse rate is calculated by dividing 60 by that time. Compared with a method of calculating a pulse rate from frequency analysis that requires continuous measurement data for a certain period of time, a method of calculating a pulse rate from a period of measured feature points enables removal of motion artifacts by removing a feature point period erroneously detected due to noise caused by body motion. In addition, since a minimum measurement time required is shorter than that for frequency analysis and a pulse rate can be calculated from several beats, it is possible to calculate a pulse rate at shorter time intervals.

However, since a pulse rate at rest of a healthy person is 60 to 80 bpm, a period of feature points obtained by measurement for 5 seconds is 5 to 7 beats, and there is a problem in that a number of obtained data points are small in order to calculate a more accurate pulse rate. In addition, as shown in Figure 8(A), since a waveform of intensity variation is bimodal in synchronization with arterial blood flow volume, erroneous detection of a period of feature points is caused, which becomes a factor that causes an error in a calculated pulse rate.

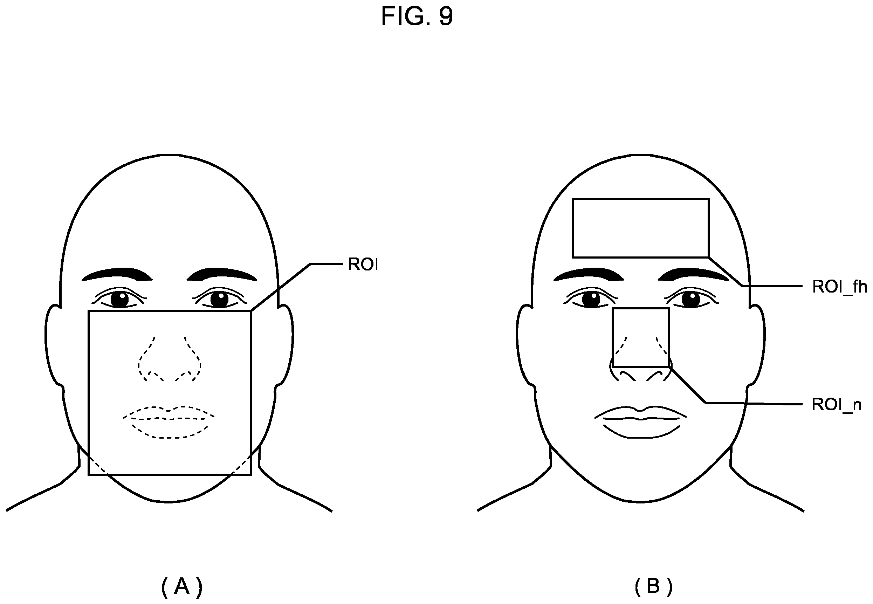

For daily measurement, a biological site to be measured needs to be exposed regardless of day or night. Therefore, in the vital sign measurement apparatus 20 according to the present invention, ROI is set to a cheek portion of a person. The location of the set ROI is shown in Figure 9(A). An average of intensity values measured at pixels within the set ROI is used as a measured value, and a temporal change of the measured value is recorded as pulse waveform data. As periods of feature points of waveform data, not only an upper-end interval $t_{tp}$ of a waveform but also a lower-end interval $t_{bp}$ is added as another feature point, thereby increasing feature points serving as reference data for calculating a pulse rate.

Next, in order to extract a feature point period required for calculating a pulse rate, an algorithm for removing erroneously detected $t_{tp}$ and $t_{bp}$ that do not indicate a pulse period from among detected $t_{tp}$ and $t_{bp}$ is described below in (a) to (f). Here, a set before removal is defined as $S_0$.

(a) For each of $t_{tp}$ and $t_{bp}$, when a peak interval $t_i$ varies by 30% or more relative to an immediately preceding peak interval $t_{i-1}$, the peak interval $t_i$ is removed from set $S_0$. A set $S_1$ of selected peak intervals is represented by Equation (1) shown below.
[Equation 1]

$$S_1 = \{t_i \mid |t_i - t_{i-1}| < 0.3t_{i-1}, \ t_i \in S_0\} \ \ldots\ldots \ (1)$$

(b) A standard deviation $\sigma_0$ of set $S_0$ is calculated, and peak intervals $t_i$ that vary within a range of $2\sigma_0$ are removed from set $S_1$. A set $S_2$ of selected peak intervals is represented by Equation (2) shown below.
[Equation 2]

$$S_2 = \{t_i \mid |t_i - \tilde{t}| < 2\sigma_0, t_i \epsilon S_1\} \ \ldots\ldots \ (2)$$

(c) A standard deviation $\sigma_2$ of set $S_2$ is calculated, and peak intervals $t_i$ that vary within a range of $\sigma_2$ are removed from set $S_2$. A set $S_3$ of selected peak intervals is represented by Equation (3) shown below.
[Equation 3]

$$S_3 = \{t_i \mid |t_i - \tilde{t}| < \sigma_2, t_i \epsilon S_2\} \ \ldots\ldots \ (3)$$

(d) A standard deviation $\sigma_3$ of set $S_3$ is calculated, and peak intervals $t_i$ that vary within a range of $\sigma_3$ are removed from $S_3$. A set $S_4$ of selected peak intervals is represented by Equation (4) shown below.
[Equation 4]

$$S_4 = \{t_i \,||t_i - \tilde{t}| < \sigma_3, t_i \epsilon S_3\} \quad \cdots\cdots \; (4)$$

(e) Peak intervals blood remaining in set $S_4$ are converted into pulse rates, and a histogram with bins of 5 bpm is generated. Here, while a width of a pulse rate of one bin of the histogram is uniform, a width of a peak interval corresponding to the pulse rate differs. Accordingly, a weighted histogram is generated using Equation (5) shown below.
[Equation 5]

$$h'_{i-i+5} = \frac{t_{i-i+5}}{t_{30-35}} h_{i-i+5} \quad \cdots\cdots \; (5)$$

Here, $t_{30-35}$ represents a time width of a peak interval for a pulse rate from 30 bpm to 35 bpm, $t_{i-i+5}$ represents a time width of a peak interval for a pulse rate from i bpm to i+5 bpm, $h_{i-i+5}$ represents a frequency of peak intervals before correction for a pulse rate from i bpm to i+5 bpm, and $h'_{i-i+5}$ represents a corrected value of a frequency of peak intervals for a pulse rate from i bpm to i+5 bpm.
(f) With respect to values of the weighted histogram, a window having a width of 20 bpm is set so that a sum of frequencies of four adjacent bins is maximized, and peak intervals $t_i$ outside the window are removed.

According to the above-described algorithm, an average value of extracted peak intervals is set as a peak interval t within a measurement period, and a value obtained by dividing 60 seconds by the peak interval t is set as a pulse rate.

In this manner, the third control unit 62 sets feature points at an upper end and a lower end, respectively, of an intensity waveform of reflected light obtained from the near-infrared detection unit 60, and estimates a pulse rate based on peak intervals between upper ends and between lower ends, which are periods of the respective feature points. In addition, the third control unit 62 calculates a standard deviation of a plurality of peak intervals and removes peak intervals that do not indicate a pulse period based on the standard deviation. Furthermore, the third control unit 62 generates a weighted histogram in predetermined time units from pulse rates converted based on remaining peak intervals after removal, and corrects a frequency of the peak intervals based on the histogram.

Thus, the third control unit 62 can calculate an accurate pulse rate from a measured waveform of pulse waveform data for a relatively short period of time based on a group of pixels within the set ROI.

B. Skin Temperature Measurement Using a Far-Infrared Detection Unit

Heat generated inside a living body is transported to a body surface by conduction and convection. However, since heat conduction by biological tissue itself is poor and acts as thermal insulation, most transport of heat to the skin is considered to be due to skin blood flow. Skin blood flow volume varies due to activity of the autonomic nervous system, mainly through vasoconstriction and vasodilation effects of the sympathetic nervous system and the parasympathetic nervous system.

In conventional prior studies, attempts have been made to estimate activity of the autonomic nervous system by measuring changes in skin temperature. However, since a facial heat distribution is greatly affected by a hairstyle of the subject to be measured and whether the subject to be measured wears glasses, the human and environment information input/output unit according to the present invention is configured to set an appropriate measurement site for estimating activity of the autonomic nervous system based on a near-infrared image.

In order to estimate a stress state from changes in skin temperature, it is necessary to set, as ROI to be measured, a facial site at which temperature changes due to stress prominently appear. Among facial sites, arteriovenous anastomoses (AVA), which are highly susceptible to activity of the autonomic nervous system, are particularly concentrated in a nasal region, making the nasal region suitable for skin temperature measurement for the purpose of estimating a stress state.

In addition, since skin temperature is affected by ambient air temperature, changes in skin temperature need to be recorded as relative temperature. At this time, ROI measured as a reference for changes in skin temperature of the nasal region needs to be set at a site that is less susceptible to activity of the autonomic nervous system. As a facial site having a low density of AVA and being less susceptible to activity of the autonomic nervous system, a forehead region can be cited.

Based on the above, in the third control unit 62 according to the present invention, changes in skin temperature are recorded as a temperature difference between a region of interest ROI_n of a nasal region and a region of interest ROI_fh of a forehead region. Locations of the respective ROIs are shown in Figure 9(B). In addition, an equation for calculating a temperature change is shown in Equation (6).

[Equation 6]

$$T_r = T_n - T_{fh} \quad \ldots \ldots \quad (6)$$

Here, $T_n$ represents an average value of skin temperatures measured at all pixels within ROI_n, $T_{fh}$ represents an average value of skin temperatures measured at all pixels within ROI_fh, and $T_r$ represents a relative temperature between the forehead region and the nasal region. In setting each ROI, coordinates of a nasal region and a forehead region in a near-infrared image are converted into coordinates in a far-infrared image.

Specifically, in performing coordinate conversion from a near-infrared (NIR) image to a far-infrared (FIR) image, since a near-infrared camera and a far-infrared camera differ in resolution and angle of view, coordinate information of the near-infrared image is associated with pixels of the far-infrared image.

That is, an x-coordinate $X_{fir}$ on a far-infrared image is expressed as shown in the following Equation (7), where a horizontal angle of view of a near-infrared camera is $\theta_{nir\_h}$ and a horizontal angle of view of a far-infrared camera is $\theta_{fir\_h}$.

[Equation 7]

$$x_{\text{fir}} = \frac{40}{\tan\frac{\theta_{\text{fir\_h}}}{2}} \left( \frac{\tan\frac{\theta_{\text{nir\_h}}}{2}}{320} x_{\text{nir}} + \tan\frac{\theta_{\text{fir\_h}}}{2} - \tan\frac{\theta_{\text{nir\_h}}}{2} \right) \quad \ldots\ldots \quad (7)$$

In addition, a y-coordinate Yfir on a far-infrared image is expressed as shown in the following Equation (8), where a vertical angle of view of a near-infrared camera is $\theta_{nir\_v}$ and a vertical angle of view of a far-infrared camera is $\theta_{fir\_v}$. Here, d represents a difference between optical axes, and L represents a distance to an object.

[Equation 8]

$$y_{\text{fir}} = \frac{30}{\tan\frac{\theta_{\text{fir\_v}}}{2}} \left( \frac{\tan\frac{\theta_{\text{nir\_v}}}{2}}{240} y_{\text{nir}} + \tan\frac{\theta_{\text{fir\_v}}}{2} - \tan\frac{\theta_{\text{nir\_v}}}{2} - \frac{d}{L} \right) \quad \ldots\ldots \quad (8)$$

Thus, following automatic detection results of a measurement target site using image information of the near-infrared detection unit 60, the third control unit 62 can accurately calculate a relative temperature difference between skin temperatures of a forehead region and a nasal region of a subject based on image information of the far-infrared detection unit 61.

C. Respiration Measurement Based on Skin Temperature

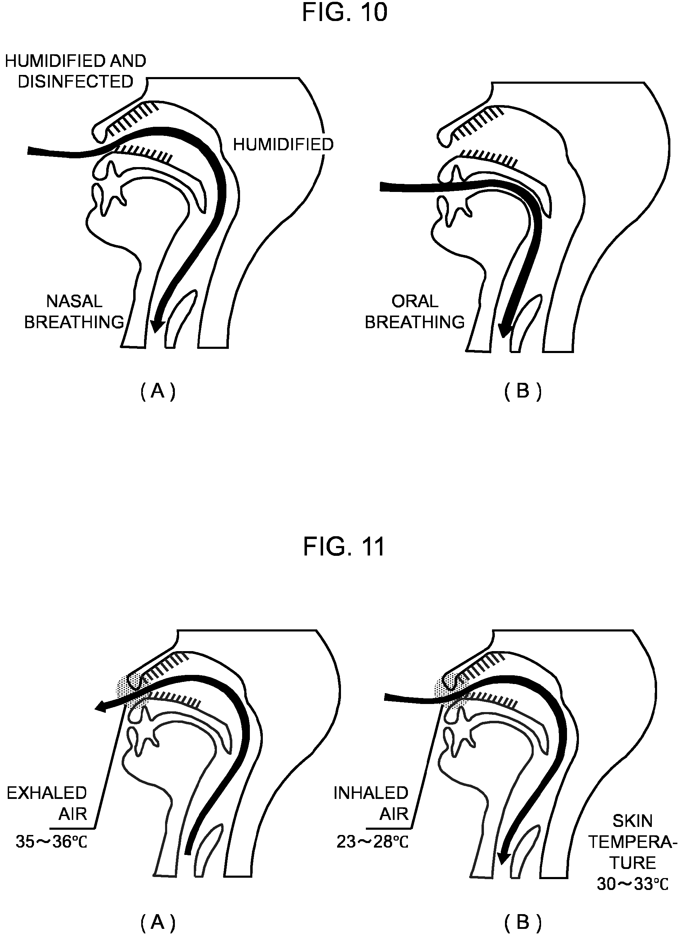

Respiration is related to functions of the autonomic nervous system and immunity, and is used for diagnosis of sleep disorders. Respiration includes nasal breathing (Figure 10(A)) and oral breathing (Figure 10(B)), and nasal breathing is originally preferable. In the case of oral breathing, inhaled air does not pass through cilia and mucosa of the nasal cavity. In addition, oral breathing causes various diseases, including sleep apnea syndrome (SAS).

As shown in Figure 11(A) and Figure 11(B), nostrils and an oral cavity are warmed by exhaled air (35 to 36 °C) and cooled by inhaled air (23 to 28 °C). Therefore, a region of interest (ROI) is set at nostrils and an oral cavity of a subject, and temperature changes of the nostrils and the oral cavity due to respiration are measured by a far-infrared detection unit (a far-infrared camera). Since a surface temperature of skin is affected by ambient air temperature, measurement is performed as a relative temperature between nostrils and an oral cavity.

In practice, since automatic detection of a measurement target site based on a skin temperature distribution map is difficult, as described above, automatic detection of a measurement target site (nostrils and an oral cavity) is performed using image information of a near-infrared detection unit (camera), and a region of interest (ROI) is set. Then, while a nasal temperature in nasal breathing is relatively high, an oral temperature in oral breathing is relatively low.

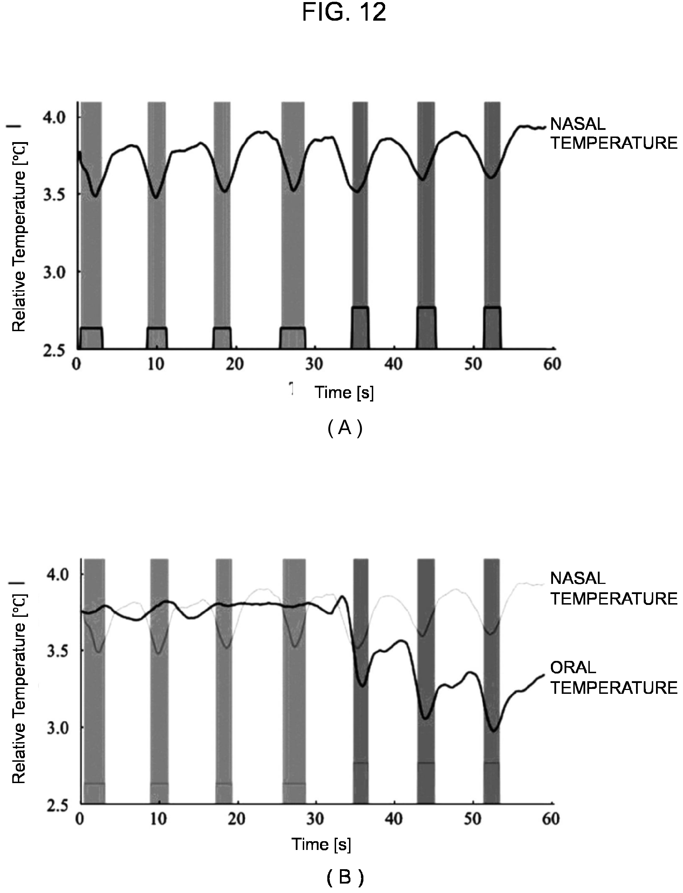

In practice, after nasal breathing and oral breathing by a subject were consecutively measured for 30 seconds each, a one-minute break was provided, and the same respiration measurement was repeated four times. As a result, as shown in Figure 12(A), a decrease in nasal temperature due to inhalation in nasal breathing was observed. In addition, as shown in Figure 12(B), a decrease in oral temperature corresponding to oral breathing was observed.

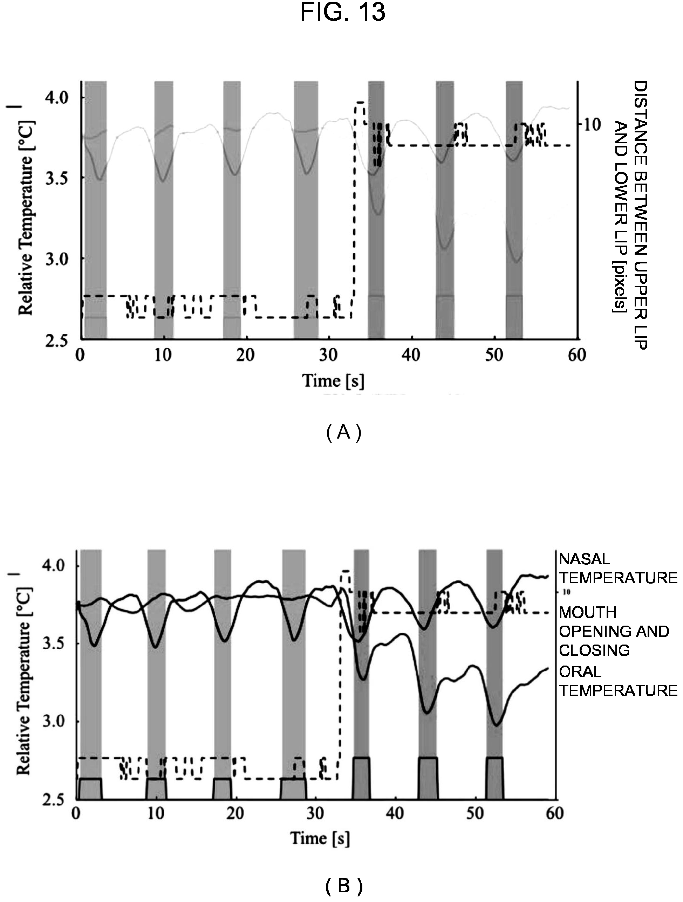

Furthermore, as shown in Figure 13(A), opening and closing of the mouth due to a change in a breathing method from nasal breathing to oral breathing was observed based on a distance between an upper lip and a lower lip. When the graphs of Figure 12(A), Figure 12(B), and Figure 13(A) are superimposed and displayed, they are represented as shown in Figure 13(B).

It should be noted that, as a method for extracting an inhalation timing, first, high-frequency noise is removed from measurement results of a relative temperature between nostrils and an oral cavity using a moving average filter, and then first-order differentiation is performed to extract a temperature decrease timing due to exhalation.

In addition, when a nasal temperature and an oral temperature decrease at the same timing, since air inflow through a nasal cavity pathway occurs due to alveolar pressure becoming negative relative to atmospheric pressure, it becomes possible to determine oral breathing.

In this manner, it is possible to realize calculation of a respiration rate and determination of a respiration method by a non-contact measurement method. Although simultaneous measurement of nasal breathing and oral breathing is possible, by executing an algorithm that takes characteristics of temperature changes during each breathing into account, it is possible to realize accurate calculation of a respiration rate and determination of a respiration method.

D. Oxygen Saturation Using Two Types of Near-Infrared Wavelengths

Conventionally, a pulse oximeter is known as a measurement device that utilizes light absorption characteristics of hemoglobin in blood. A pulse oximeter is a medical device that is attached to a fingertip to measure blood oxygen saturation and a pulse rate.

In the present invention, since blood oxygen saturation has a property of varying depending on a respiration rate, a degree of binding between hemoglobin and oxygen, and cardiac output, attention is focused on a difference in absorption characteristics between oxygenated hemoglobin ($HbO_2$) and reduced hemoglobin (Hb).

In a conventional measurement method, infrared light (with a wavelength around 660 nm) and near-infrared light (with a wavelength around 900 nm) are irradiated onto a fingertip from a light-emitting element, and blood oxygen saturation is estimated from a ratio of amounts of transmitted light measured by a light-receiving element, while a pulse rate is also estimated using periodic changes in an amount of the transmitted light. Infrared light, which is visible light, has been used because a difference in absorptivity between oxygenated hemoglobin ($HbO_2$) and reduced hemoglobin (Hb) is large.

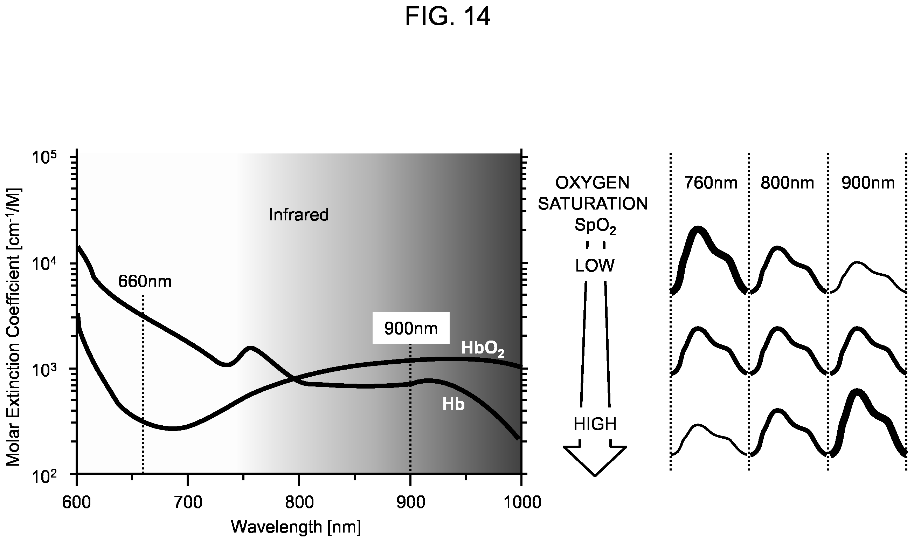

However, in the present invention, non-contact measurement is performed using only near-infrared (NIR) light, which is invisible light (Figure 14). As a result, by alternately blinking light-emitting elements that irradiate two types of near-infrared light having wavelengths of 800 nm (or 760 nm) and 900 nm, and imaging irradiation sites (ROI) of the respective light-emitting elements with a single near-infrared camera (near-infrared detection unit 60), it is possible to measure blood oxygen saturation centered on ROI of a subject in a non-contact manner even in a dark environment.

(2-5) Method of Detecting an Activity State of a Nervous System

The autonomic nervous system includes a sympathetic nervous system that functions when a living body is in a tense state or an active state, and a parasympathetic nervous system that functions when the living body is in a resting state. While a blood pressure value and a pulse rate increase in a state in which the sympathetic nervous system is dominant, a blood pressure value and a pulse rate decrease in a state in which the parasympathetic nervous system is dominant; therefore, autonomic nervous function and cardiac function have a high correlation.

As a method for measuring autonomic nervous function, there is a method for measuring sympathetic nervous function of the heart using heart rate variability; specifically, a CVRR (Coefficient of Variation of R-R intervals) method in which a coefficient of variation is obtained and evaluated using R-R intervals of an electrocardiogram waveform, and, secondly, a method in which a power ratio of frequency components (a high-frequency component and a low-frequency component) of heart rate variability is used as an index of sympathetic nervous activity.

In addition, there is also a method for measuring autonomic nervous function by measuring sympathetic nervous function of a vascular system using a pulse wave. As this measurement method, there is a method in which a magnitude of amplitude fluctuation of a photoplethysmographic (PPG) waveform is calculated as an evaluation value of autonomic nervous function.

In the present invention, the third control unit 62 can contribute to evaluation of autonomic nervous function of a subject (such as presence or absence of imbalance) based on all or a combination of a pulse rate of the subject detected using the near-infrared detection unit 60 and the far-infrared detection unit 61 constituting the human and environment information input/output unit 10, a relative temperature difference between skin temperatures of a forehead region and a nasal region of the subject, a respiration rate and a respiration method of the subject, and an oxygen saturation of the subject.

(2-6) Method of Detecting Psychological Information

In the human and environment information input/output unit 10, the information detection unit 25 analyzes facial expressions and voice of a subject using a facial imaging camera 21 and a sound collection microphone 22 to detect psychological information.

Specifically, the information detection unit 25 detects facial expressions of a subject by executing a facial analysis algorithm, including not only expressions such as sadness, joy, anger, empathy, and frivolity, but also flushed skin, goosebumps, a frequency of eyelid opening and closing, tears, and the like, and simultaneously detects a tone of voice and a pitch of voice (such as a voice tone and a sense of excitement) of the subject by executing a voice analysis algorithm.

This facial analysis algorithm is designed to approximate human interpretation (experience, preconception, and prediction), and is an algorithm obtained from accumulated results regarding how emotions and psychology are reflected in facial expressions based on states and changes of a human face.

Similarly, the voice analysis algorithm is designed to approximate human interpretation (experience, preconception, and prediction), and is an algorithm obtained from accumulated results regarding how emotions and psychology are reflected in voice based on a tone and a pitch of a human voice.

By using this voice analysis algorithm, it becomes possible to estimate a change in a psychological state of a subject through daily communication of the subject and analyses thereof and narrative analysis, based on keywords used in utterances of the subject, intonation during utterances, loudness of voice, a state of narrative structure, continuity or discontinuity of communication, and differences from accumulated data thereof.

In addition, the information detection unit 25 can also estimate a psychological state of a subject based on personal information of the subject (such as heart rate, electrocardiogram, pulse rate, blood pressure, body temperature, skin blood flow distribution, skin temperature distribution, perspiration, and odor substances), which are detection results obtained by the above-described vital sign measurement apparatus 20, and environment information of the subject, which are detection results obtained by a peripheral measurement device 24 described below.

In this manner, the information detection unit 25 can comprehensively estimate and grasp psychological information of a person based on both personal information obtained by sensing and personal information obtained by communication analysis and narrative analysis.

(2-7) Method of Detecting an Activity State of a Motor System (Action Information and Behavior Information)

In the human and environment information input/output unit 10, the information detection unit 25 detects motion data recognized by a motion capture device 23 as an activity state of a motor system of a subject.

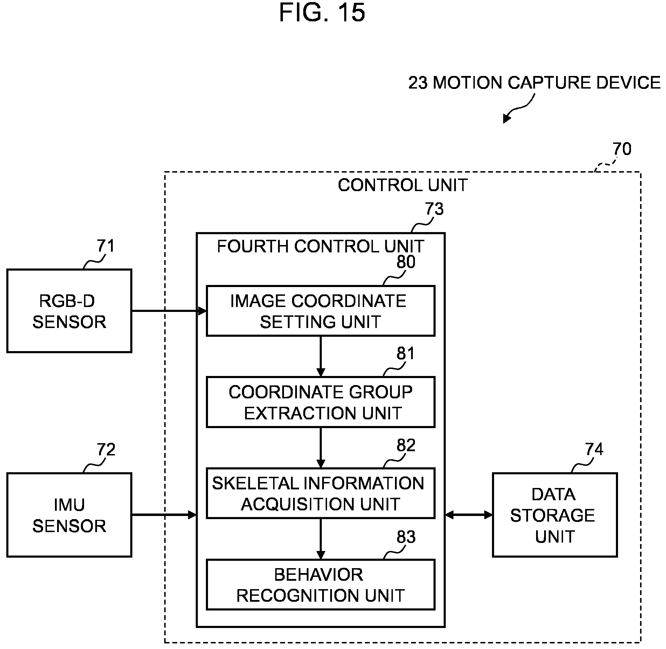

Here, as shown in Figure 15, the motion capture device 23 is arranged in indoor facilities such as a home of a subject, and includes a control unit 70 that controls the entire device, and an RGB-D sensor 71 and an IMU (Inertial Measurement Unit) sensor 72 connected to the control unit 70. The IMU sensor 72 includes a three-axis acceleration sensor, a three-axis angular velocity sensor, and a geomagnetic sensor, and is capable of measuring three-axis acceleration, angular velocity, and geomagnetism.

The RGB-D sensor 71 has a depth sensor capable of measuring a distance from the camera to a target object in addition to an RGB color camera function, and is capable of performing three-dimensional scanning of the target object. As the RGB-D sensor 71, for example, when a LiDAR camera L515 of RealSense (a trademark of Microsoft Corporation of the United States) is applied, the depth sensor includes a LiDAR sensor, and measures a time until laser light irradiated is reflected back after hitting an object to measure a distance and a direction to the object.

In practice, the RGB-D sensor 71 is arranged to capture an entire body of the subject with a standing position of the subject in indoor facilities as a reference, and sequentially acquires an RGB image and a depth image as imaging results.

The control unit 70 includes a fourth control unit 73 including a central processing unit (CPU) that performs overall control of the entire system, and a data storage unit 74 in which various data are database-managed so as to be readable and writable in accordance with instructions from the fourth control unit 73.

The fourth control unit 73 includes an image coordinate setting unit 80, a coordinate group extraction unit 81, a skeletal information acquisition unit 82, and a behavior recognition unit 83. The image coordinate setting unit 80 sets, as image coordinates, a plurality of skeletal representative points assigned to an entire body of a subject while estimating a posture of the entire body of the subject based on RGB images sequentially acquired from the RGB-D sensor 71.

Specifically, the image coordinate setting unit 80 sets an image coordinate group in a two-dimensional coordinate system in which one of left and right shoulder portions of the subject is defined as a coordinate origin, a direction of a line connecting the left and right shoulder portions is defined as an X-axis with respect to the coordinate origin, and a vertical direction with respect to the X-axis is defined as a Z-axis. That is, the coordinate origin is moved to a right shoulder portion or a left shoulder portion, and an XZ plane is rotated so as to coincide with a line connecting the left and right shoulder portions. As a result, it becomes possible to perform action recognition with improved robustness regardless of a position of the RGB-D sensor 71.

The coordinate group extraction unit 81 sequentially extracts, from among image coordinate groups set by the image coordinate setting unit 80, image coordinate groups related to behavior of the subject based on a transition state of posture of the subject. In practice, the coordinate group extraction unit 81 needs to extract key points of an entire body as extraction targets from behaviors, assuming that clothing of the subject and a surrounding environment may change.

Accordingly, the coordinate group extraction unit 81 adopts a lightweight OpenPose architecture using a trained model (a system that estimates a human skeleton by deep learning) to obtain whole-body posture estimation and image coordinates of skeletal representative points of both hands and fingers. For example, for an upper body of a subject, the coordinate group extraction unit 81 sequentially extracts, as an image coordinate group, skeletal representative points totaling 60 points, including 18 points of a torso of the upper body of the subject and 42 points of both hands and fingers (21 points per hand). It should be noted that, by using only stages 1 and 2 among six stages of the OpenPose architecture, it is possible to reduce a computational load by 32.4%.

The skeletal information acquisition unit 82 acquires temporally continuous three-dimensional skeletal information centered on both hands and fingers of a subject by time-synchronizing image coordinate groups sequentially extracted by the coordinate group extraction unit 81 with depth images sequentially acquired from the RGB-D sensor 71.

Specifically, the skeletal information acquisition unit 82 acquires three-dimensional skeletal information by configuring a three-dimensional coordinate system in which a depth direction in depth images sequentially acquired from the RGB-D sensor 71 is defined as a Y-axis, together with a two-dimensional coordinate system of image coordinate groups sequentially extracted by the coordinate group extraction unit 81.

A conversion formula from an image coordinate system of a two-dimensional coordinate system to a world coordinate system of a three-dimensional coordinate system is expressed as shown in the following Equation (1).
[Equation 9]

$$X_{\mathrm{W}} = \mathrm{R}^{-1}\left(Z_{\mathrm{C}}\mathrm{K}^{-1}\begin{bmatrix}x_{\mathrm{I}}\\1\end{bmatrix} - t\right)$$

$$\cdots\ (9)$$

Where $X_W={}^t[X_W,Y_W,Z_W]$ represents coordinates in the world coordinate system, and $x_I={}^t[x_I,y_I]$ represents coordinates in the image coordinate system. K (a $3\times3$ matrix) represents intrinsic parameters of an image sensor, R (a $3\times3$ matrix) represents a rotation matrix for coordinate transformation to the image coordinate system, t (a $3\times1$ vector) represents a translation vector, and $Z_C$ represents depth information corresponding to two-dimensional coordinates in the image coordinate system.

These K, R, and t are calculated by camera calibration using Zhang's method ("A flexible new technique for camera calibration". IEEE Transactions on Pattern Analysis and Machine Intelligence, 22(11):1330-1334, 2000). For calibration to calculate K, a calibration board on which circular dots are printed in a grid pattern was used. Center coordinates of each dot on the calibrated board were calibrated to one-thousandth precision.

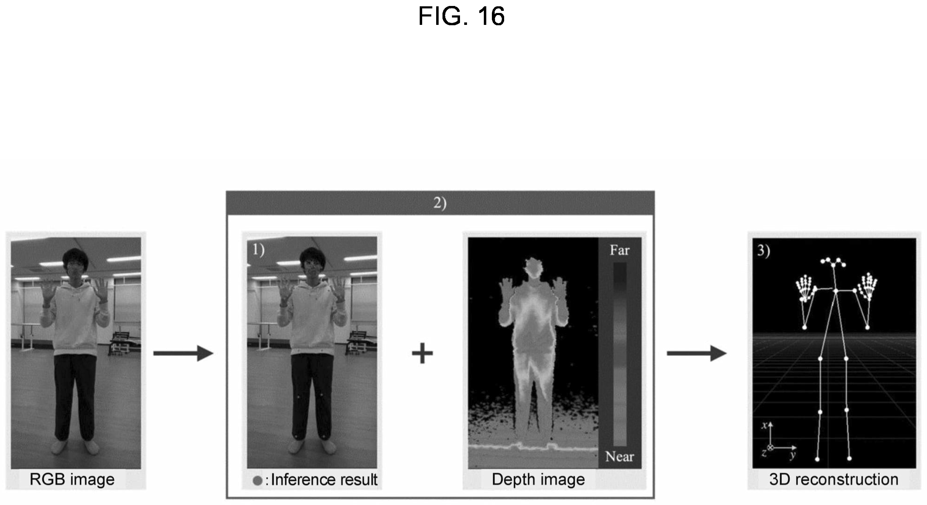

As a result, in the motion capture device 23, as shown in Figure 16, it becomes possible to acquire three-dimensional skeletal information while maintaining high robustness regardless of an imaging position by the RGB-D sensor 71, by clarifying a relationship between a position in a three-dimensional space and a position in a captured image for an entire body of the subject.

The behavior recognition unit 83 recognizes a behavior, which is a connection of a plurality of local actions, based on three-dimensional skeletal information sequentially acquired by the skeletal information acquisition unit 82 from a transition state of posture of the subject.

The behavior recognition unit 83 sequentially recognizes corresponding local actions from three-dimensional skeletal information sequentially acquired by the skeletal information acquisition unit 82 while referring to a handwashing action recognition model constructed by deep learning using action recognition patterns set for each local action as training data.

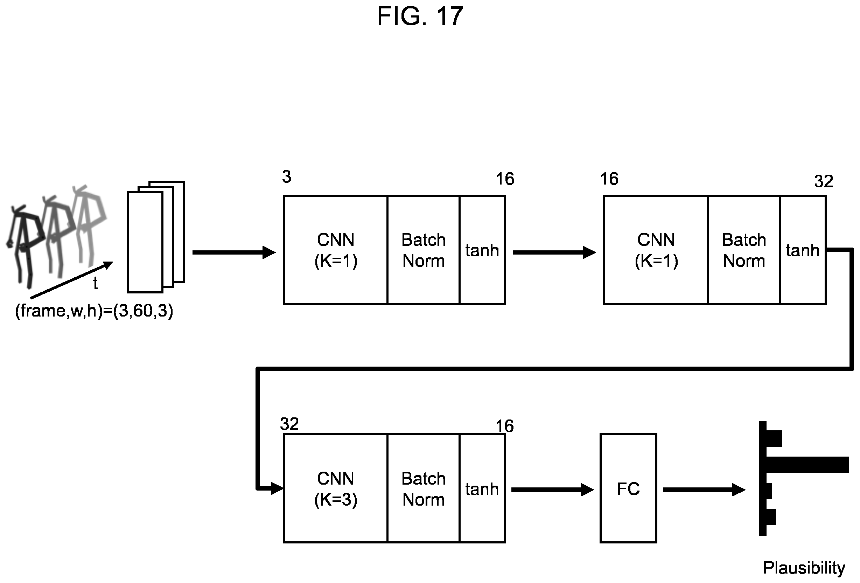

Specifically, in order to recognize a plurality of local actions, the behavior recognition unit 83 applies a behavior recognition model including three modules, namely a convolutional neural network (CNN) layer, a batch normalization layer (Batch Norm), and an activation function layer (tanh function), and a fully connected layer, as shown in Figure 17.

In the behavior recognition model, skeletal information of a current frame and a frame two frames prior thereto is input, thereby making it possible to obtain likelihoods for each of a plurality of types of local actions related to behavior.

Furthermore, as a recognition result, the behavior recognition unit 83 performs post-processing to determine, as a current local action, an action with the highest frequency among actions observed in 15 frames (a current frame and 14 preceding frames). In this manner, the behavior recognition unit 83 trained the behavior recognition model by supervised learning using an original dataset. For optimization, a cross-entropy loss function and Adam (Adaptive Moment Estimation) with a learning rate of 0.001 were used.

As a result, the motion capture device 23 can significantly improve recognition accuracy and recognition speed of local action based on three-dimensional skeletal information.

(2-8) Method of Detecting Environment Information

In the human and environment information input/output unit 10, the peripheral measurement device 24 includes a thermometer, a hygrometer, a barometer, and surrounding sound collectors for audible sound and ultrasonic sound, and acquires environment information of surroundings centered on the subject. This environment information mainly includes temperature, humidity, and surrounding sound in surroundings in which the subject is present.

(3) Adaptive Identification Method of Internal State

In the extended space construction system 1 according to the present invention, when a plurality of participants participating in the information space participate in communication activities in the information space, the participants are caused to share activity contents with one another while reflecting intervention information for guiding the communication activities in a positive direction.

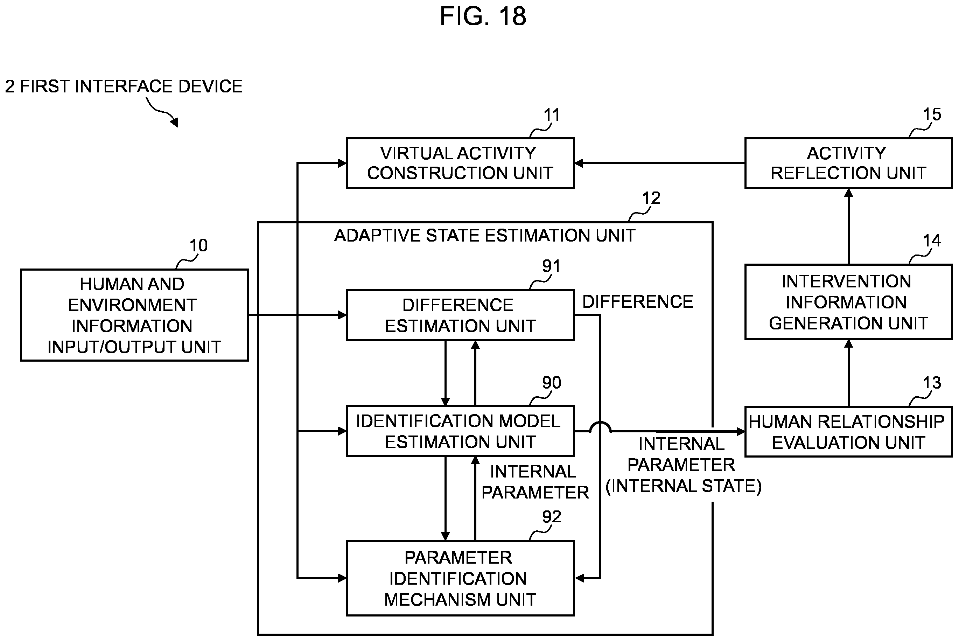

The adaptive state estimation unit 12 in the interface device 2 for each participant adaptively estimates an internal state of a corresponding participant based on human and environment information output from the human and environment information input/output unit 10. As shown in Figure 18, in which the same reference numerals are assigned to corresponding parts as those in Figure 2, the adaptive state estimation unit 12 includes an identification model estimation unit 90, a difference estimation unit 91, and a parameter identification mechanism unit 92.

The identification model estimation unit 90 sets an identification model in which internal states of the participants are modeled as state variables, and to estimate internal parameters, which are variable characteristics of the identification model, with reference to human and environment information output from the human and environment information input/output unit 10.

The difference estimation unit 91 estimates, with respect to human and environment information output in real time from the human and environment information input/output unit 10, a difference indicating a degree to which an identification model related to internal parameters estimated by the identification model estimation unit 90 has approached.

The parameter identification mechanism unit 92 modifies internal parameters constituting the identification model so that the difference estimated by the difference estimation unit 91 becomes smaller.

In this manner, the adaptive state estimation unit 12 estimates, as an internal state of a participant, internal parameters modified by the parameter identification mechanism unit 92.

As described above, since the "internal state" is information that contributes to empathy among participants sharing a common space, it is often explained, in understanding such empathy, as a basic attitude of counseling (an attitude of actively listening) by using the three principles in so-called Carl Rogers theory.

The three principles of this Carl Rogers theory position "Empathetic Understanding," "Unconditional Positive Regard," and "Congruence" as core conditions for therapeutic personality change to occur.

"Empathetic Understanding" means sensing another person's internal world as if one were that person oneself, and also means understanding that person's assertions as if one were in the other person's position. It is also necessary to communicate what has been sensed to the other person. The above-mentioned "as if" means that, since another person's internal world cannot actually be grasped, it is necessary to virtually identify (estimate) the internal world in the information space. By feeding this back to the other person and clarifying the difference, it becomes possible to approach a next stage of congruence through further feedback.

"Unconditional Positive Regard" means listening to the other person's story without introducing evaluations of good or bad or evaluations of like or dislike, and also means listening to the other person's story with positive interest, without denying it, as to why the other person has come to think in such a manner. Through genuine interest in the other person's issues, the other person can speak with a sense of security. While smoothly acquiring human and environment information from the other person, information transmission is performed with awareness of system identification (identification of the other person's model) so as to allow the information transmission to continue as much as possible. It is preferable to improve accuracy of system identification while appropriately applying identification inputs for system identification.

Furthermore, "Congruence" means experiencing and accepting one's own feelings as they are, and is authenticity as a human being (that what one says and what one does are the same). In order to improve accuracy of mutual understanding between oneself and the other person, it is preferable to perform feedback to an identification model of the other person that has been virtually prepared (system identification).

At that time, it is important not only to identify the other person's model but also for the other person to identify one's own model. Therefore, feedback is provided based on one's original responses, rather than responding through an ideally constructed model of oneself. If a false ideal self and an original self are brought into congruence, a model of oneself and a model of the other person mutually identify each other and, while mutually obtaining feedback, mutually and adaptively identify and approach each other's models. In this manner, as a form of mutual understanding, it leads to the above-described "Empathetic Understanding."

Thus, "empathy" is defined as "Empathetic Understanding" on the premise that complete empathy with another person cannot be obtained. Furthermore, in order to promote "empathy," continuous efforts are made so that the other person can accept inputs necessary for model identification with a positive attitude toward the other person such that empathy can be enabled, and, based on information obtained from the other person, feedback is performed such that a difference between information obtained from the other person and information maintained as empathetic understanding becomes smaller based on identification results and state estimation results, while a model and reality are brought into agreement such that a difference between a state of the other person obtained as empathetic understanding and actual reactions and narratives becomes smaller.

Subsequently, the human relationship evaluation unit 13 evaluates overall and interpersonal human relationships among the participants while integrating internal states of all participants participating in the communication activities when each participant participates in the communication activities.

These human relationships represent correlations of cognition, emotion, and volition in overall and interpersonal relationships among the participants, and refer to relationships between people that integrate psychology, emotions, personality, and attitudes. Relationships include a relationship between specific participants (one-to-one), a relationship between a specific participant and multiple participants (one-to-many), and a relationship between multiple participants and multiple participants (many-to-many).

The intervention information generation unit 14 successively generates intervention information representing affirmative words, actions, and attitudes for the purpose of empathetic understanding among the participants in the information space, based on evaluation results obtained by the human relationship evaluation unit 13.

That is, intervention information is information representing utterances, actions, and attitudes that become expressions enabling the participants to more freely experience their internal emotions, perceptions, and personal meanings, in order to transmit empathetic understanding that accurately has sensitivity to moments present in the here and now, based on evaluation results of overall and interpersonal human relationships among the participants.

Furthermore, the intervention information generation unit 14 changes contents of intervention information based on internal parameters estimated by the identification model estimation unit 90 such that modifications by the parameter identification mechanism unit 92 are gradually reduced.

The activity reflection unit 15 reflects the intervention information generated by the intervention information generation unit 14 on all or individual participants so as to intervene in communication activities of each participant constructed in the information space.

At that time, based on the intervention information, the activity reflection unit 15 reflects, as means for intervening in communication activities, not only conversation but also nonverbal body language, facial expressions, tone of voice, manner of breathing, behaviors, and the like, thereby sufficiently promoting empathy among the participants while having a role of a facilitator.

What this facilitator does is to understand participants sharing a common space in the information space and environment information, and, while determining an intention as to what state is to be brought about, to change inputs necessary for facilitation in accordance with the intention.

Specifically, there are two points in facilitation. First, when participants sharing a common space and environment information can be understood, facilitation is performed by using identification inputs (language, actions, facial expressions, and the like) for knowing internal states of the participants sharing the space (a current state), and by issuing, to relevant parties, information that facilitates the current state toward a target state (a desirable state to be reached, such as consensus building and empathy).

Second, another point is that, with respect to a situation already formed by environment information and human information from participants (for example, when interactions have already occurred among the participants), by acquiring such information and using the information as identification inputs, the facilitator performs identification without issuing information by himself/herself (or by adding a small amount thereof), and issues, to relevant parties, information that facilitates the current state toward a target state.

The meaning of intervention by the facilitator is to change characteristics that a person or a space constituted by people has at that time, and to change the characteristics to different characteristics. Furthermore, in semantic terms, although there simply exists a process in which the facilitator once intervenes and reaches problem solving only in that situation, at this level, when the facilitator is no longer present, the situation returns to the previous state.

For this reason, an advanced facilitator aims to change characteristics themselves of people and a space constituting the situation by means of multiple, multiplexed interventions. As a result, even without feedback, the system itself becomes able to exist as a system having characteristics by which problems have been solved, whereby advanced facilitation is realized (that is, in fact, the model itself has been changed).

The phrase "the system itself becomes able to exist as a system having characteristics by which problems have been solved" means that the result is obtained as synaptic connections of a nervous system are adjusted (gradually changing due to plasticity), or that memory of one or more keywords instantaneously changes characteristics of the system itself (a mechanism in which skipping is forcibly performed within oneself).

According to the above configuration, in the extended space construction system 1, during interactions among the participants in the information space, facilitation is performed so that mutual empathy can be promoted and active interactions are encouraged, thereby making it possible to share an internal environment of the information space, experience physical and psychological connections with others, and improve empathy toward others.

When such an extended space construction system 1 is applied to counseling, "Active Listening," which is required of a counselor, is interpreted in system-theoretical terms. In other words, in system-theoretical terms, it can be explained by an identification process and state observation.

In this system-theoretical interpretation, while moderately providing inputs that resonate with characteristics of a participant, an internal state is estimated by identifying characteristic parameters of the participant from information obtained from the participant and the environment, thereby grasping what state the participant is in.

Further advancing one step, when internal and external feedback is provided to a participant to modify characteristic parameters of the participant or to change a dynamic equilibrium point, and while gradually changing the participant to another stage, the participant can be modified to a new and better state, it can be considered that good counseling has been performed.

(4) Other Embodiments

(4-1) Improvement in Accuracy of Interaction Content by Learning

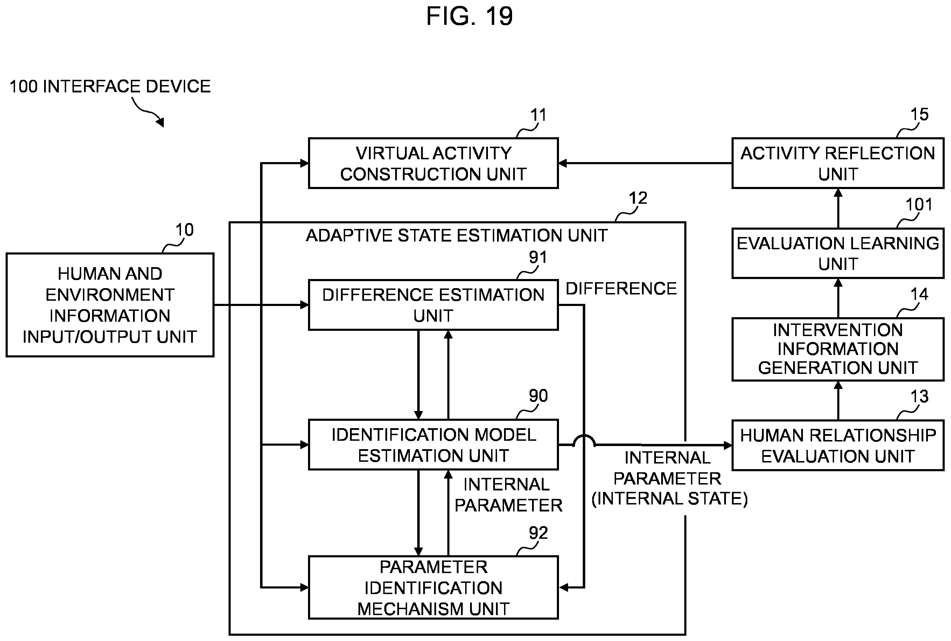

In Figure 19, in which the same reference numerals are assigned to corresponding parts as those in Figure 18, an evaluation learning unit 101 is interposed between the intervention information generation unit 14 and the activity reflection unit 15 in an interface device 100 for each participant. The evaluation learning unit 101 constructs an effectiveness evaluation model learned to evaluate effectiveness of intervention information generated by the intervention information generation unit 14 based on an integration result of human and environment information of the participants.

The intervention information generation unit 14 adaptively modifies intervention information so as to always satisfy evaluation criteria based on an effectiveness evaluation model constructed by the evaluation learning unit 101.

As a result, in the extended space construction system 1, during activities of each participant in the information space, it becomes possible to maintain relatively high quality of intervention information that affects internal states of the participants (such as expert knowledge of clinical psychologists).

(4-2) Improvement in Environment of Information Space by Learning

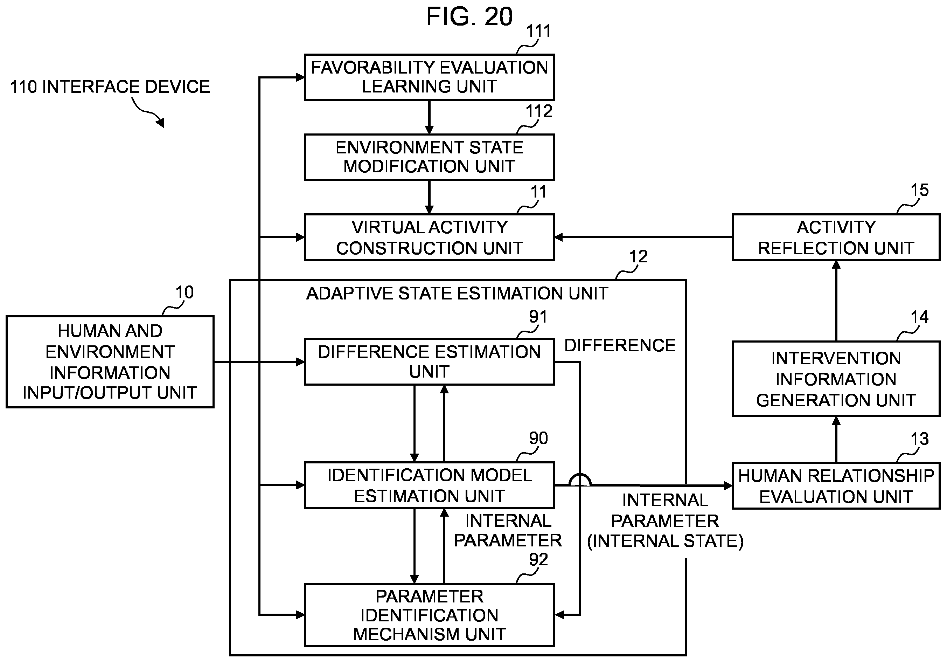

In Figure 20, in which the same reference numerals are assigned to corresponding parts as those in Figure 18, a favorability evaluation learning unit 111 and an environment state modification unit 112 are further provided in an interface device 110 for each participant.

The favorability evaluation learning unit 111 constructs a favorability evaluation model learned to evaluate favorability of an environmental state of a selected information space (atmosphere, background sound, harmony of brightness, saturation, and color tone, and the like) based on an integration result of human and environment information of the participants.

The environment state modification unit 112 adaptively modifies an environmental state of the information space so as to always satisfy evaluation criteria based on a favorability evaluation model constructed by the favorability evaluation learning unit 111.

As a result, in the extended space construction system 1, during activities of each participant in the information space, it becomes possible to always maintain an environmental state of the information space that affects internal states of the participants in an optimal state.

(4-3) Method for Integrating Internal States among Participants

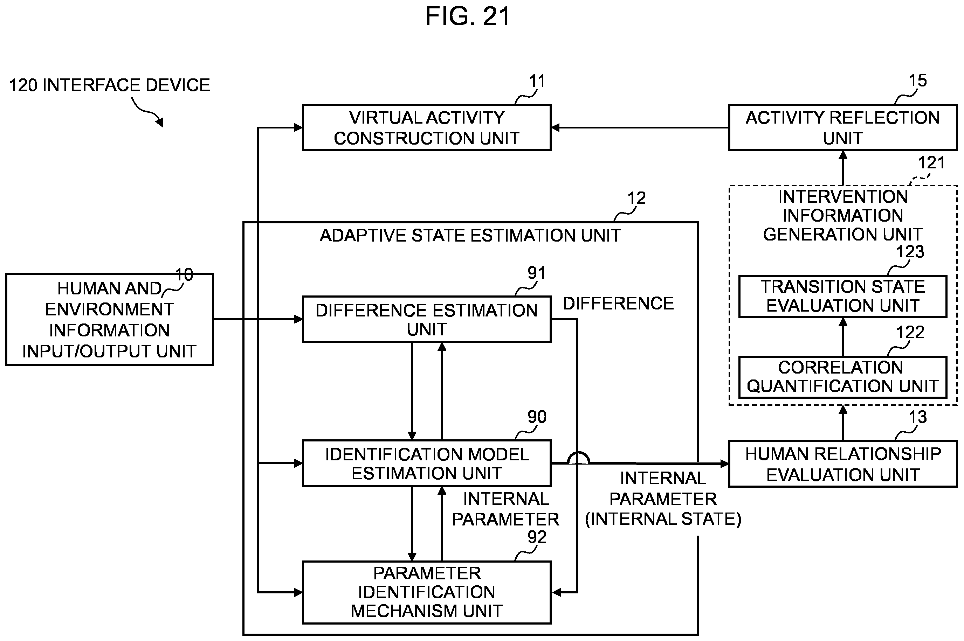

In Figure 21, in which the same reference numerals are assigned to corresponding parts as those in Figure 18, an intervention information generation unit 121 in an interface device 120 for each participant has a correlation quantification unit 122 and a transition state evaluation unit 123, and adaptively adjusts intervention information.

The correlation quantification unit 122 quantitatively determines, in a time-series manner, correlations among internal states of the participants, respectively. The transition state evaluation unit 123 evaluates transition states of internal states of the participants based on correlations respectively quantified by the correlation quantification unit 122. Then, the intervention information generation unit 121 adaptively adjusts intervention information in accordance with evaluation results obtained by the transition state evaluation unit 123.

As a result, in the extended space construction system 1, it is possible for the system as a whole to grasp processes in which internal states of the participants change while being influenced by words, actions, and attitudes of other participants, thereby enabling appropriate responses (interventions) to each participant.

(4-4) Expansion of Activity Areas in Information Space

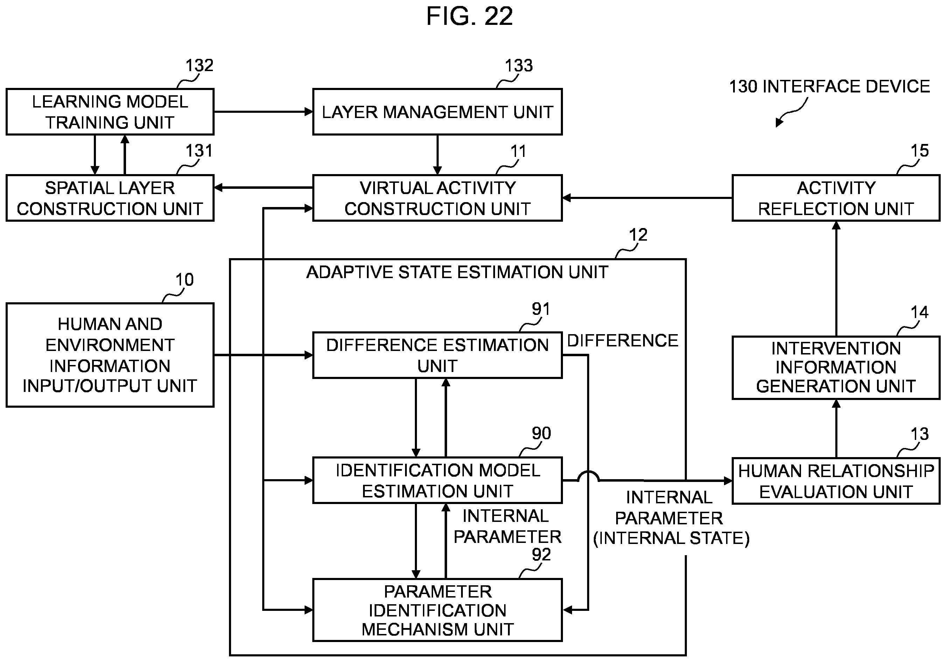

In Figure 22, in which the same reference numerals are assigned to corresponding parts as those in Figure 18, a spatial layer construction unit 131, a learning model training unit 132, and a layer management unit 133 are provided in an interface device 130 for each participant.

The spatial layer construction unit 131 constructs, when each participant performs communication activities in the information space, a spatial layer for extending the information space while participants in the information space cooperate with one another.

As a result, in the extended space construction system 1, it becomes possible to extend the information space while the participants cooperate with one another within the information space.

The learning model training unit 132 trains a learning model constructed by statistical and mathematical processing for mapping cooperative contents among participants to spatial expansion of the information space, based on a construction process of a spatial layer constructed by the spatial layer construction unit 131.

Then, the spatial layer construction unit 131 automatically constructs a spatial layer based on a learning model trained by the learning model training unit 132 even without cooperation of the participants.

As a result, in the extended space construction system 1, it becomes possible to cause a process of expanding the information space to be learned through learning and to automatically continue expansion processing even without cooperation of the participants.

Furthermore, the layer management unit 133 manages, for the purpose of maintaining order, a spatial layer constructed in an information space to be extended when a learning model is trained by the learning model training unit 132.

As a result, in the extended space construction system 1, when expansion processing of the information space is continued, it becomes possible to prevent disadvantages to the participants in advance by performing management for the purpose of maintaining order.

Reference Signs List

1: extended space construction system, 2, 100, 110, 120, 130: interface device, 3: cloud, 10: human and environment information input/output unit, 11: virtual activity construction unit, 12: adaptive state estimation unit, 13: human relationship evaluation unit, 14, 121: intervention information generation unit, 15: activity reflection unit, 20: vital sign measurement apparatus, 21: facial imaging camera, 22: sound collection microphone, 23: motion capture device, 24: peripheral measurement device, 25: information detection unit, 30: electrode terminal group, 31: photoelectric probe window, 32: connection terminal, 40: brain activity measurement unit, 41: blood flow measurement unit, 42: electrocardiograph, 43: first control unit, 44: wireless communication device, 45: net-shaped base, 46A to 46N: sensor units, 47: light emission unit, 48: light reception unit, 50: biological signal measurement wearing device, 51: drive unit, 52: joint periphery detection unit, 53: biological signal sensor, 54A to 54F: biological signal sensor groups, 55: measurement module, 56: measurement module controller, 57: memory, 58: communication unit, 59: second control unit, 60: near-infrared detection unit, 61: far-infrared detection unit, 62: third control unit, 70: control unit, 71: RGB-D sensor, 72: IMU sensor, 73: fourth control unit, 74: data storage unit, 80: image coordinate setting unit, 81: coordinate group extraction unit, 82: skeletal information acquisition unit, 83: behavior recognition unit, 90: identification model estimation unit, 91: difference estimation unit, 92: parameter identification mechanism unit, 101: evaluation learning unit, 111: favorability evaluation learning unit, 112: environment state modification unit, 122: correlation quantification unit, 123: transition state evaluation unit, 131: spatial layer construction unit, 132: learning model training unit, 133: layer management unit

**Claims**

1. An extended space construction system comprising:

a human and environment information input/output unit that is provided for each of a plurality of participants present in a real space and that acquires human and environment information including brain and nervous system information, muscular and skeletal system information, physiological information, psychological information, motion information, behavior information, and environment information of each participant;
a virtual activity construction unit that virtually constructs, in real time, communication activities of each participant in the real space in an information space based on the human and environment information corresponding to each participant output from the human and environment information input/output unit;

an adaptive state estimation unit that is provided for each participant and that adaptively estimates an internal state of a corresponding participant based on the human and environment information output from the human and environment information input/output unit;

a human relationship evaluation unit that evaluates overall and interpersonal human relationships among the participants while integrating internal states of all participants participating in the communication activities when each participant participates in the communication activities;

an intervention information generation unit that successively generates intervention information representing affirmative words, actions, and attitudes for the purpose of empathetic understanding among the participants in the information space based on evaluation results obtained by the human relationship evaluation unit; and

an activity reflection unit that reflects the intervention information generated by the intervention information generation unit on all or individual participants so as to intervene in the communication activities of each participant constructed in the information space.

2. The extended space construction system according to claim 1,

wherein the adaptive state estimation unit has

an identification model estimation unit that sets an identification model in which internal states of the participants are modeled as state variables, and estimates internal parameters that are variable characteristics of the identification model with reference to the human and environment information;

a difference estimation unit that estimates, with respect to the human and environment information output in real time from the human and environment information input/output unit, a difference indicating a degree to which the identification model associated with the internal parameters estimated by the identification model estimation unit has approached; and

a parameter identification mechanism unit that modifies the internal parameters constituting the identification model such that the difference estimated by the difference estimation unit is reduced,

and wherein the intervention information generation unit changes contents of the intervention information based on the internal parameters estimated by the identification model estimation unit such that modification by the parameter identification mechanism unit is gradually reduced.

3. The extended space construction system according to claim 2, comprising an evaluation learning unit that constructs an effectiveness evaluation model learned to evaluate effectiveness of the intervention information generated by the intervention information generation unit based on an integration result of human and environment information of the participants,

wherein the intervention information generation unit adaptively modifies the intervention information such that evaluation criteria based on the effectiveness evaluation model constructed by the evaluation learning unit are always satisfied.

4. The extended space construction system according to claim 2, comprising:

a favorability evaluation learning unit that constructs a favorability evaluation model learned to evaluate favorability of an environmental state of a selected virtual space based on an integration result of human and environment information of the participants; and

an environment state modification unit that adaptively modifies an environmental state of the information space such that evaluation criteria based on the favorability evaluation model constructed by the favorability evaluation learning unit are always satisfied.

5. The extended space construction system according to claim 2,

wherein the intervention information generation unit has

a correlation quantification unit that quantitatively determines, in a time-series manner, correlations among internal states of the participants, and

a transition state evaluation unit that evaluates transition states of internal states of the participants based on the correlations respectively quantified by the correlation quantification unit,

and wherein the intervention information is adaptively adjusted in accordance with evaluation results obtained by the transition state evaluation unit.

6. The extended space construction system according to claim 1, comprising a spatial layer construction unit that constructs, when the participants perform communication activities in the information space, a spatial layer for extending the information space while the participants in the information space cooperate with one another.

7.  The extended space construction system according to claim 6, comprising a learning model training unit that trains a learning model constructed by statistical and mathematical processing for mapping cooperative contents among the participants to spatial expansion of the information space based on a construction process of the spatial layer constructed by the spatial layer construction unit,
    wherein the spatial layer construction unit automatically constructs the spatial layer based on the learning model trained by the learning model training unit even without cooperation of the participants.

8.  The extended space construction system according to claim 7, comprising a layer management unit that manages, for the purpose of maintaining order, the spatial layer constructed in the information space to be extended when the learning model is trained by the learning model training unit.

9.  An extended space construction method comprising:

    a first step of acquiring, for each of a plurality of participants present in a real space, human and environment information including brain and nervous system information, muscular and skeletal system information, physiological information, psychological information, motion information, behavior information, and environment information;
    a second step of virtually constructing, in real time, communication activities of each participant in the real space in an information space based on the human and environment information corresponding to each participant acquired in the first step;
    a third step of adaptively estimating, for each participant, an internal state of a corresponding participant based on the human and environment information output from the human and environment information input/output unit;
    a fourth step of evaluating overall and interpersonal human relationships among the participants while integrating internal states of all participants participating in the communication activities when each participant participates in the communication activities;
    a fifth step of successively generating intervention information representing affirmative words, actions, and attitudes for the purpose of empathetic understanding among the participants in the information space based on evaluation results obtained in the fourth step; and
    a sixth step of reflecting the intervention information generated in the fifth step on all or individual participants so as to intervene in the communication activities of each participant constructed in the information space.

10. The extended space construction method according to claim 9,

    wherein, in the third step, an identification model in which internal states of the participants are modeled as state variables is set, internal parameters that are variable characteristics of the identification model are estimated with reference to the human and environment information, and, with respect to the human and environment information acquired in real time in the first step, a difference indicating a degree to which the identification model associated with the estimated internal parameters has approached is estimated, while internal parameters constituting the identification model are modified such that the estimated difference is reduced,
    and wherein, in the fifth step, contents of the intervention information are changed based on the internal parameters estimated with reference to the human and environment information such that modification of the internal parameters is gradually reduced.

11. The extended space construction method according to claim 10, comprising a seventh step of constructing an effectiveness evaluation model learned to evaluate effectiveness of the intervention information generated by the intervention information generation unit based on an integration result of human and environment information of the participants,
    wherein, in the fifth step, the intervention information is adaptively modified such that evaluation criteria based on the effectiveness evaluation model constructed in the seventh step are always satisfied.

12. The extended space construction method according to claim 10, comprising:

    an eighth step of constructing a favorability evaluation model learned to evaluate favorability of an environmental state of a selected virtual space based on an integration result of human and environment information of the participants; and

a ninth step of adaptively modifying an environmental state of the information space such that evaluation criteria based on the favorability evaluation model constructed in the eighth step are always satisfied.

13. The extended space construction method according to claim 10, wherein, in the fifth step, after evaluating transition states of internal states of the participants based on correlations among internal states of the participants obtained by quantitatively determining the correlations in a time-series manner, the intervention information is adaptively adjusted in accordance with results of the evaluation.

14. The extended space construction method according to claim 9, comprising a tenth step of constructing, when the participants perform communication activities in the information space, a spatial layer for extending the information space while the participants in the information space cooperate with one another.

15. The extended space construction method according to claim 14, comprising an eleventh step of training a learning model constructed by statistical and mathematical processing for mapping cooperative contents among the participants to spatial expansion of the information space based on a construction process of the spatial layer constructed in the tenth step,
wherein, in the tenth step, the spatial layer is automatically constructed based on the learning model trained in the eleventh step even without cooperation of the participants.

16. The extended space construction method according to claim 15, comprising a twelfth step of managing, for the purpose of maintaining order, the spatial layer constructed in the information space to be extended when the learning model is trained in the eleventh step.

# FIG. 1

1 EXTENDED SPACE CONSTRUCTION SYSTEM

CLOUD
(INFORMATION SPACE) 3

(REAL SPACE)

PARTICIPANT

INTERFACE DEVICE 2

PARTICIPANT

INTERFACE DEVICE 2

......

PARTICIPANT

INTERFACE DEVICE 2

......

# FIG. 2

INTERFACE DEVICE

HUMAN AND ENVIRONMENT INFORMATION INPUT/OUTPUT UNIT — 10

20 — VITAL SIGN MEASUREMENT APPARATUS

21 — FACIAL IMAGING CAMERA

22 — SOUND COLLECTION MICROPHONE

23 — MOTION CAPTURE DEVICE

24 — PERIPHERAL MEASUREMENT DEVICE

25 — INFORMATION DETECTION UNIT

11 — VIRTUAL ACTIVITY CONSTRUCTION UNIT

12 — ADAPTIVE STATE ESTIMATION UNIT

13 — HUMAN RELATIONSHIP EVALUATION UNIT

14 — INTERVENTION INFORMATION GENERATION UNIT

15 — ACTIVITY REFLECTION UNIT

2

EP 4 764 791 A1

FIG. 3

(A)

(B)

EP 4 764 791 A1

## FIG. 4

(A)

(B)

EP 4 764 791 A1

# FIG. 5

(A)

(B)

# FIG. 6

BRAIN

SPINAL CORD

# FIG. 7

VITAL SIGN MEASUREMENT APPARATUS 20

SUBJECT

A

NEAR-INFRARED DETECTION UNIT 60

FAR-INFRARED DETECTION UNIT 61

THIRD CONTROL UNIT 62

# FIG. 8

( A )

( B )

FIG. 9

( A )  ROI

( B )  ROI_fh  ROI_n

EP 4 764 791 A1

## FIG. 10

HUMIDIFIED AND DISINFECTED

HUMIDIFIED

NASAL BREATHING

( A )

ORAL BREATHING

( B )

## FIG. 11

EXHALED AIR

35~36℃

INHALED AIR

23~28℃

SKIN TEMPERA-TURE

30~33℃

( A )

( B )

FIG. 12

( A )

( B )

FIG. 13

( A )

( B )

FIG. 14

EP 4 764 791 A1

FIG. 15

23 MOTION CAPTURE DEVICE

70

CONTROL UNIT

73

FOURTH CONTROL UNIT

80

71

RGB-D
SENSOR

IMAGE COORDINATE
SETTING UNIT

81

COORDINATE GROUP
EXTRACTION UNIT

82

74

72

IMU
SENSOR

SKELETAL INFORMATION
ACQUISITION UNIT

DATA
STORAGE
UNIT

83

BEHAVIOR
RECOGNITION UNIT

# FIG. 16

RGB image

2)

1)

●: Inference result

Depth image

Far

Near

3)

3D reconstruction

EP 4 764 791 A1

# FIG. 17

(frame,w,h)=(3,60,3)

3 — CNN (K=1) | Batch Norm | tanh — 16

16 — CNN (K=1) | Batch Norm | tanh — 32

32 — CNN (K=3) | Batch Norm | tanh — 16 → FC → Plausibility

EP 4 764 791 A1

# FIG. 18

2 FIRST INTERFACE DEVICE

VIRTUAL ACTIVITY CONSTRUCTION UNIT — 11

ACTIVITY REFLECTION UNIT — 15

ADAPTIVE STATE ESTIMATION UNIT — 12

HUMAN AND ENVIRONMENT INFORMATION INPUT/OUTPUT UNIT — 10

DIFFERENCE ESTIMATION UNIT — 91

DIFFERENCE

INTERVENTION INFORMATION GENERATION UNIT — 14

IDENTIFICATION MODEL ESTIMATION UNIT — 90

INTERNAL PARAMETER

INTERNAL PARAMETER (INTERNAL STATE)

HUMAN RELATIONSHIP EVALUATION UNIT — 13

PARAMETER IDENTIFICATION MECHANISM UNIT — 92

EP 4 764 791 A1

FIG. 19

# FIG. 20

110 INTERFACE DEVICE

| FAVORABILITY EVALUATION LEARNING UNIT | 111 |

| ENVIRONMENT STATE MODIFICATION UNIT | 112 |

| VIRTUAL ACTIVITY CONSTRUCTION UNIT | 11 |

| ACTIVITY REFLECTION UNIT | 15 |

| HUMAN AND ENVIRONMENT INFORMATION INPUT/OUTPUT UNIT | 10 |

ADAPTIVE STATE ESTIMATION UNIT 12

| DIFFERENCE ESTIMATION UNIT | 91 | DIFFERENCE

| IDENTIFICATION MODEL ESTIMATION UNIT | 90 |

INTERNAL PARAMETER

INTERNAL PARAMETER (INTERNAL STATE)

| PARAMETER IDENTIFICATION MECHANISM UNIT | 92 |

| INTERVENTION INFORMATION GENERATION UNIT | 14 |

| HUMAN RELATIONSHIP EVALUATION UNIT | 13 |

EP 4 764 791 A1

## FIG. 21

120 INTERFACE DEVICE

VIRTUAL ACTIVITY CONSTRUCTION UNIT — 11

ACTIVITY REFLECTION UNIT — 15

ADAPTIVE STATE ESTIMATION UNIT — 12

121

INTERVENTION INFORMATION GENERATION UNIT

HUMAN AND ENVIRONMENT INFORMATION INPUT/OUTPUT UNIT — 10

DIFFERENCE ESTIMATION UNIT — 91    DIFFERENCE

TRANSITION STATE EVALUATION UNIT — 123

IDENTIFICATION MODEL ESTIMATION UNIT — 90

CORRELATION QUANTIFICATION UNIT — 122

INTERNAL PARAMETER

INTERNAL PARAMETER (INTERNAL STATE)

HUMAN RELATIONSHIP EVALUATION UNIT — 13

PARAMETER IDENTIFICATION MECHANISM UNIT — 92

EP 4 764 791 A1

FIG. 22

## INTERNATIONAL SEARCH REPORT

| International application No. |
| --- |
| **PCT/JP2024/021785** |

| | |
| --- | --- |
| **A.** | **CLASSIFICATION OF SUBJECT MATTER** |

*G06F 3/01*(2006.01)i; *G06T 13/40*(2011.01)i; *G10L 13/10*(2013.01)i
FI:   G06F3/01 510; G06T13/40; G10L13/10 114; G06F3/01 515

According to International Patent Classification (IPC) or to both national classification and IPC

| | |
| --- | --- |
| **B.** | **FIELDS SEARCHED** |

Minimum documentation searched (classification system followed by classification symbols)

G06F3/01; G06T13/40; G10L13/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2022-068904 A (HONDA MOTOR CO., LTD.) 11 May 2022 (2022-05-11) <br> entire text, all drawings | 1-16 |
| A | JP 2022-031617 A (OLYMPUS CORPORATION) 22 February 2022 (2022-02-22) <br> entire text, all drawings | 1-16 |
| A | US 2023/0047787 A1 (WARNER BROS. ENTERTAINMENT INC.) 16 February 2023 (2023-02-16) <br> entire text, all drawings | 1-16 |
| P, A | JP 2024-077887 A (CANON KABUSHIKI KAISHA) 10 June 2024 (2024-06-10) <br> entire text, all drawings | 1-16 |

☐ Further documents are listed in the continuation of Box C.      ☑ See patent family annex.

| | |
| --- | --- |
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 August 2024** | **20 August 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/021785**

| Patent document cited in search report | | | Publication date (day/month/year) | Patent family member(s) | Publication date (day/month/year) |
|---|---|---|---|---|---|
| JP | 2022-068904 | A | 11 May 2022 | (Family: none) | |
| JP | 2022-031617 | A | 22 February 2022 | (Family: none) | |
| US | 2023/0047787 | A1 | 16 February 2023 | WO 2019/067783 A1 CN 112118784 A KR 10-2021-0003718 A | |
| JP | 2024-077887 | A | 10 June 2024 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022067709 A
- JP 2022068904 A
- JP 5283700 B
- JP 5409637 B

**Non-patent literature cited in the description**

- A flexible new technique for camera calibration. *IEEE Transactions on Pattern Analysis and Machine Intelligence*, 2000, vol. 22 (11), 1330-1334